(19)

Europäisches
Patentamt

European
Patent Office

Office européen
des brevets

(11) **EP 4 498 707 A1**

(12) **EUROPEAN PATENT APPLICATION**
published in accordance with Art. 153(4) EPC

(43) Date of publication:
**29.01.2025 Bulletin 2025/05**

(21) Application number: **23795076.1**

(22) Date of filing: **15.04.2023**

(51) International Patent Classification (IPC):
**H04W 4/02** (2018.01)

(52) Cooperative Patent Classification (CPC):
**G01S 11/02; H04W 4/02; H04W 64/00;
H04W 74/00; H04W 74/08**

(86) International application number:
**PCT/CN2023/088548**

(87) International publication number:
**WO 2023/207643 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210467604**

(71) Applicant: **Huawei Technologies Co., Ltd.
Shenzhen, Guangdong 518129 (CN)**

(72) Inventors:
• **GUO, Ziyang
Shenzhen, Guangdong 518129 (CN)**

• **QIAN, Bin
Shenzhen, Guangdong 518129 (CN)**
• **LIU, Peng
Shenzhen, Guangdong 518129 (CN)**
• **LIU, Chenchen
Shenzhen, Guangdong 518129 (CN)**
• **LI, Yunbo
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **UWB CHANNEL ACCESS METHOD AND COMMUNICATION APPARATUS**

(57)    This application discloses a UWB channel access method and a communication apparatus. This application is applied to a wireless local area network system that supports the 802.11 series protocols, for example, a next-generation Wi-Fi protocol of IEEE802.11ax, like 802.11be, Wi-Fi 7, or EHT, and for another example, a next-generation protocol of 802.11be, like Wi-Fi 8, and is also applied to a wireless personal area network system and a sensing sensing system based on ultra-wideband UWB. The method includes: An initiator broadcasts first information, where the first information indicates that the initiator obtains a first using period of a UWB channel by contention, and indicates first time, where the first time is time of starting to contend for a second using period of the UWB channel, and the second using period is after the first using period; and the initiator performs ranging or sensing by using the UWB channel. This reduces duration for listening to the UWB channel and improves UWB channel access efficiency.

FIG. 6

## Description

This application claims priority to Chinese Patent Application No. 202210467604.1, filed with the China National Intellectual Property Administration on April 29, 2022, and entitled "UWB CHANNEL ACCESS METHOD AND COMMUNICATION APPARATUS", which is incorporated herein by reference in its entirety.

## TECHNICAL FIELD

This application relates to the communication field, and in particular, to a UWB channel access method and a communication apparatus.

## BACKGROUND

With rapid popularization and development of mobile communication and Internet technologies, people's requirements for location services are increasing. For example, requirements for location services in application scenarios such as factory personnel positioning, goods positioning in logistics and warehousing, and intelligent sensing of a vehicle door lock are increasing. An ultra-wideband (ultra-wideband, UWB) technology is widely used in a positioning system for its large bandwidth (500 MHz or even larger) and higher precision than other wireless technologies.

Although the large bandwidth of UWB brings higher precision for ranging (or sensing), the UWB also requires a device to have a capability of high speed data receiving and sending. However, due to low spectral efficiency of a UWB system based on pulse transmission, when same information is transmitted, power consumption overheads of using the UWB are much higher than those of using other narrowband short range protocols (such as a Bluetooth protocol and a Zigbee protocol). Researchers consider receiving and sending signals for ranging (or sensing) by using the UWB system, and transmitting all other data by using the narrowband protocol, to ensure ranging (or sensing) accuracy and reduce power consumption. A currently used UWB channel access solution (for example, a narrowband channel-assisted UWB channel access solution) has low UWB channel access efficiency. Therefore, a UWB channel access solution with higher access efficiency needs to be studied.

## SUMMARY

Embodiments of this application disclose a UWB channel access method and a communication apparatus, to improve UWB channel access efficiency.

According to a first aspect, embodiments of this application provide an ultra-wideband UWB channel access method, where the method includes: An initiator broadcasts first information, where the first information indicates that the initiator obtains a first using period of a UWB channel by contention, and indicates first time, the first time is time of starting to contend for a second using period of the UWB channel, and the second using period is after the first using period; and the initiator performs ranging or sensing by using the UWB channel, where a channel used by the initiator to broadcast the first information is different from the UWB channel.

In embodiments of this application, the initiator broadcasts the first information, to indicate another UWB apparatus that the initiator obtains the first using period of the UWB channel by contention and starts to contend for the second using period of the UWB channel. This can reduce duration of listening to the UWB channel, and improve UWB channel access efficiency.

In a possible implementation, the method further includes: The initiator sends second information to a responder through unicast, where the second information is used by the responder to perform ranging or sensing with the initiator by using the UWB channel.

In this implementation, the initiator sends the second information to the responder through unicast, where the second information is used by the responder to perform ranging or sensing with the initiator by using the UWB channel. This can avoid a security or privacy problem that may be caused when ranging arrangement or sensing arrangement is carried in the first information.

In a possible implementation, the method further includes: The initiator periodically broadcasts third information, where the third information is used to obtain end time of the first using period or the first time.

In this implementation, the third information is periodically broadcast. This can effectively reduce listening time when the another UWB apparatus accesses the UWB channel, and reduce power consumption.

In a possible implementation, the third information includes one or more of the following: the end time of the first using period, the first time, a time interval from a current moment to the end time of the first using period, and a time interval from the current moment to the first time.

In this implementation, the third information is periodically broadcast, so that the another UWB apparatus can learn of the end time of the first using period and the first time.

In a possible implementation, the method further includes: The initiator receives fourth information, where the fourth information indicates a status in which the UWB channel is used; and after obtaining the UWB channel by contention, the initiator performs ranging or sensing based on the fourth information in a period during which the UWB channel is not used.

In this implementation, ranging or sensing is performed based on the fourth information in the period during which the UWB channel is not used. This can improve utilization of the UWB channel.

In a possible implementation, that an initiator broadcasts first information includes: The initiator broadcasts the first information over a first channel, where a frequency range of the first channel is 5730 MHz to 5735 MHz.

In this implementation, the initiator broadcasts the first information over the first channel, so that interference to the UWB channel can be avoided.

In a possible implementation, the method further includes: The initiator broadcasts first channel using information, where the first channel using information includes information that the initiator uses the UWB channel. For example, the first channel using information includes ranging arrangement or sensing arrangement of the initiator.

In this implementation, the initiator broadcasts the first channel using information, so that the another UWB apparatus performs ranging or sensing in a period during which the UWB channel is not used. This improves utilization of a channel.

In a possible implementation, that an initiator broadcasts first information includes: The initiator broadcasts the first information over a narrowband mirroring channel corresponding to the UWB channel. Optionally, a frequency range of the narrowband mirroring channel is 5730 MHz to 5735 MHz.

In this implementation, the initiator broadcasts the first information over the narrowband mirroring channel corresponding to the UWB channel, so that a UWB apparatus receiving the first information can learn of, based on the narrowband mirroring channel, the UWB channel obtained by the initiator by contention. In addition, the first information is broadcast over the narrowband mirroring channel, so that interference to the UWB channel can be reduced.

According to a second aspect, embodiments of this application provide another UWB channel access method, where the method includes: An initiator broadcasts fifth information, where the fifth information indicates that the initiator obtains a third using period of a UWB channel by contention, a time interval between third time and second time is less than a time threshold, the second time is time at which the initiator broadcasts the fifth information, and the third time is start time of the third using period, or the third time is end time of the third using period; and the initiator performs ranging or sensing by using the UWB channel, where a channel used by the initiator to broadcast the fifth information is different from the UWB channel.

In embodiments of this application, the initiator broadcasts the fifth information, and the time interval between the third time and the second time is less than the time threshold. This can prevent the UWB channel from being reserved too early.

In a possible implementation, the method further includes: The initiator sends seventh information to a responder through unicast, where the seventh information is used by the responder to perform ranging or sensing with the initiator by using the UWB channel.

In this implementation, the initiator sends the seventh information to the responder through unicast, where the seventh information is used by the responder to perform ranging or sensing with the initiator by using the UWB channel. This can improve information security.

In a possible implementation, the method further includes: The initiator periodically broadcasts eighth information, where the eighth information includes the end time of the third using period.

In this implementation, the eighth information is periodically broadcast. This can effectively reduce listening time when another UWB apparatus accesses the UWB channel, and reduce power consumption.

In a possible implementation, before that an initiator broadcasts fifth information, the method further includes: The initiator contends for the UWB channel; and when a time interval between fourth time at which the initiator obtains the UWB channel by contention and fifth time is greater than or equal to the time threshold, the initiator contends for the UWB channel again or contends for the UWB channel again after sending data where the fifth time is start time or end time of a fourth using period, and the fourth using period is a period estimated by the initiator for using the UWB channel when the initiator obtains the UWB channel by contention at the fourth time. The fourth time is before the second time.

The third using period may be understood as a time period estimated by the initiator for using the UWB channel when the initiator obtains the UWB channel by contention at seventh time. The seventh time is after the fourth time. The fourth using period is the same as or different from the third using period. The start time of the fourth using period may be the same as the start time of the third using period, or may be later than the start time of the third using period. The end time of the fourth using period may be the same as the end time of the third using period, or may be later than the end time of the third using period.

In this implementation, when the time interval between the fourth time at which the initiator obtains the UWB channel by contention and the fifth time is greater than or equal to the time threshold, the initiator contends for the UWB channel again or contends for the UWB channel again after sending the data. This can prevent the UWB channel from being reserved too early.

In a possible implementation, the method further includes: The initiator receives sixth information, where the sixth information indicates a status in which the UWB channel is used; and after obtaining the UWB channel by contention, the initiator performs ranging or sensing based on the sixth information in a period during which the UWB channel is not used.

In this implementation, after obtaining the UWB channel by contention, the initiator performs ranging or sensing based on the sixth information in a period during which the UWB channel is not used. This can improve utilization of the UWB channel.

In a possible implementation, that an initiator broadcasts fifth information includes: The initiator broadcasts the fifth information over a first channel, where a frequency range of the first channel is 5730 MHz to 5735 MHz.

In this implementation, the initiator broadcasts the fifth information over the first channel. This can avoid interference to the UWB channel.

In a possible implementation, the method further includes: The initiator broadcasts second channel using information, where the second channel using information includes information that the initiator uses the UWB channel. For example, the second channel using information includes ranging arrangement or sensing arrangement of the initiator.

In this implementation, the initiator broadcasts the second channel using information, so that the another UWB apparatus performs ranging or sensing in a period during which the UWB channel is not used. This can improve utilization of a channel.

In a possible implementation, that an initiator broadcasts fifth information includes: The initiator broadcasts the fifth information over a narrowband mirroring channel corresponding to the UWB channel. Optionally, a frequency range of the narrowband mirroring channel is 5730 MHz to 5735 MHz.

In this implementation, the initiator broadcasts the fifth information over the narrowband mirroring channel corresponding to the UWB channel, so that a UWB apparatus receiving the fifth information can learn of, based on the narrowband mirroring channel, the UWB channel obtained by the initiator by contention. In addition, the fifth information is broadcast over the narrowband mirroring channel. This can reduce interference to the UWB channel.

In a possible implementation, the method further includes: The initiator continues to contend for the UWB channel in a process in which the UWB channel is used. For example, the initiator continues to contend for the UWB channel after the UWB channel is obtained by contention by the another UWB apparatus based on the received broadcast indication.

In this implementation, the initiator continues to contend for the UWB channel in the process in which the UWB channel is used, so that a UWB apparatus with long contention (or waiting) time has a higher opportunity to access the UWB channel.

According to a third aspect, embodiments of this application provide another UWB channel access method, where the method includes: receiving first information broadcast by an initiator, where the first information indicates that the initiator obtains a first using period of a UWB channel by contention, and indicates first time, the first time is time of starting to contend for a second using period of the UWB channel, and the second using period is after the first using period; and starting to contend for the second using period of the UWB channel at the first time, where a channel used by the initiator to broadcast the first information is different from the UWB channel. A channel used by the initiator to broadcast the first information is different from the UWB channel.

In this implementation, the second using period of the UWB channel starts to be contended for at the first time, and duration of the UWB channel may be listened, thereby reducing power consumption.

In a possible implementation, the method further includes: receiving second information sent by the initiator through unicast, where the second information is used by a responder to perform ranging or sensing with the initiator by using the UWB channel; and performing ranging or sensing with the initiator by using the UWB channel.

In this implementation, the initiator sends the second information through unicast. This can improve security of the second information in a transmission process.

In a possible implementation, the method further includes: receiving third information periodically broadcast by the initiator, where the third information is used to obtain the end time of the first using period or the first time.

In this implementation, the end time of the first using period can be accurately obtained by receiving the third information periodically broadcast by the initiator.

In a possible implementation, the method further includes: after the UWB channel is obtained by contention, performing ranging or sensing based on the first information in a period during which the UWB channel is not used.

In this implementation, ranging or sensing is performed based on the first information in the period during which the UWB channel is not used. This can utilization of the UWB channel.

In a possible implementation, the method further includes: broadcasting fourth information, where the fourth information indicates a status in which the UWB channel is used.

In this implementation, the fourth information is broadcast, so that another UWB apparatus performs ranging or sensing in a period during which the UWB channel is not used. This can improve utilization of the UWB channel.

In a possible implementation, the receiving first information broadcast by an initiator includes: receiving the first information broadcast by the initiator over a first channel, where a frequency range of the first channel is 5730 MHz to 5735 MHz.

In this implementation, the first information broadcast by the initiator over the first channel is received. This can reduce interference to the UWB channel.

In a possible implementation, after the receiving first information broadcast by an initiator, the method further includes: in response to the first information, stopping contending for the UWB channel.

In this implementation, stopping contending for the UWB channel may reduce power consumption.

It should be noted that the third aspect and the possible implementations of the third aspect may be executed by the responder of the initiator, or may be any UWB apparatus (that is, a non-responder) that receives the first information.

According to a fourth aspect, embodiment of this application provide another UWB channel access method, where the method includes: receiving fifth information broadcast by an initiator, where the fifth information indicates that the initiator obtains a third using period of the UWB channel by contention, a time interval between third time and second time is less than a time threshold, the second time is time at which the initiator broadcasts the fifth information, the third time is start time of the third using period, or the third time is end time of the third using period, and a channel used by the initiator to broadcast the fifth information is different from the UWB channel; and determining, based on the fifth information, that the initiator obtains the third using period by contention.

In embodiments of this application, the time interval between the third time and the second time is less than the time threshold. This can prevent the UWB channel from being reserved too early.

In a possible implementation, the method further includes: receiving seventh information sent by the initiator through unicast, where the seventh information is used by the responder to perform ranging or sensing with the initiator by using the UWB channel.

In this implementation, the seventh information sent by the initiator through unicast is received, so that security of the seventh information in a transmission process can be improved.

In a possible implementation, the method further includes: receiving eighth information periodically broadcast by the initiator, where the eighth information includes end time of the third using period.

In this implementation, the eighth information periodically broadcast by the initiator is received, to determine the end time of the third using period.

In a possible implementation, the method further includes: sending sixth information, where the sixth information indicates a status in which the UWB channel is used.

In this implementation, the sixth information is sent, so that another device obtains a status in which the UWB channel is used.

In a possible implementation, the receiving fifth information broadcast by an initiator includes: receiving the fifth information broadcast by the initiator over a first channel, where a frequency range of the first channel is 5730 MHz to 5735 MHz.

In an implementation, the fifth information broadcast by the initiator over the first channel is received, so that interference to the UWB channel can be reduced.

In a possible implementation, the receiving fifth information broadcast by an initiator includes: receiving the fifth information broadcast by the initiator over a narrowband mirroring channel corresponding to the UWB channel. Optionally, a frequency range of the narrowband mirroring channel is 5730 MHz to 5735 MHz.

In this implementation, the fifth information broadcast by the initiator over the narrowband mirroring channel corresponding to the UWB channel is received. The UWB channel obtained by contention by the initiator may be learned based on the narrowband mirroring channel.

In a possible implementation, the method further includes: receiving second channel using information broadcast by the initiator, where the second channel using information includes information that the initiator uses the UWB channel; and performing ranging or sensing based on the second channel using information in a period during which the UWB channel is not used.

In this implementation, ranging or sensing is performed based on the second channel using information in the period during which the UWB channel is not used, thereby improving utilization of a channel.

In a possible implementation, the method further includes: continuing to contend for the UWB channel in a process in which the UWB channel is used. For example, after the fifth information is received, the UWB channel continues to be contended for.

In this implementation, in a process in which the UWB channel is used, contending for the UWB channel continues, so that an opportunity of accessing the UWB channel can be increased.

In a possible implementation, the method further includes: when a time interval between fifth time at which the UWB channel is obtained by contention and sixth time is greater than or equal to the time threshold, contending for the UWB channel again or contending for the UWB channel again after sending data, where the sixth time is start time of fifth using period, or the sixth time is end time of the fifth using period, and the fifth using period is later than the third using period.

In this implementation, when the time interval between the fifth time at which the UWB channel is obtained by contention and the sixth time is greater than or equal to the time threshold, the initiator contends for the UWB channel again or contends for the UWB channel again after sending data. This can prevent the UWB channel from being reserved too early.

It should be noted that the fourth aspect and the possible implementations of the fourth aspect may be executed by a responder of the initiator, or may be any UWB apparatus (that is, a non-responder) that receives the first information.

According to a fifth aspect, embodiments of this application provide another UWB channel access method, where the method includes: An initiator receives fourth information, where the fourth information indicates a status in which the UWB channel is used or the UWB channel is not used; and after obtaining the UWB channel by contention, the initiator performs ranging or sensing with a responder based on the fourth information in a period during which the UWB channel is not used.

In embodiments of this application, after obtaining the UWB channel by contention, the initiator performs ranging or sensing based on the fourth information in a period during which the UWB channel is not used, thereby improving utilization of a channel.

In a possible implementation, the method further includes: broadcasting tenth information, where the tenth information indicates a status in which the UWB channel is used or the UWB channel is not used.

In this implementation, the tenth information is broadcast, so that another UWB apparatus performs ranging or sensing in a period during which the UWB channel is not used, thereby improving utilization of a channel.

According to a sixth aspect, embodiments of this application provide a communication apparatus. The communication apparatus has a function of implementing behavior in the method embodiment in the first aspect. The communication apparatus may be a communication device (for example, a mobile phone, a base station, or a laptop), or may be a component (for example, a processor, a chip, or a chip system) of the communication device, or may be a logical module or software that can implement all or some functions of the communication device. The function of the communication apparatus may be implemented by hardware, or may be implemented by hardware by executing corresponding software. The hardware or the software includes one or more modules or units corresponding to the foregoing function. In a possible implementation, the communication apparatus includes a receiving module and a processing module. The receiving module is configured to broadcasts first information, where the first information indicates that an initiator obtains a first using period of a UWB channel by contention, and indicates first time, the first time is time of starting to contend for a second using period of the UWB channel, and the second using period is after the first using period; and the processing module is configured to perform ranging or sensing by using the UWB channel, where a channel used by the processing module to broadcast the first information is different from the UWB channel.

In a possible implementation, the receiving module is specifically configured to send second information to a responder through unicast, where the second information is used by the responder to perform ranging or sensing with the initiator by using the UWB channel.

In a possible implementation, the receiving module is specifically configured to periodically broadcast third information, where the third information is used to obtain the end time of the first using period or the first time.

In a possible implementation, the receiving module is further configured to receive fourth information, where the fourth information indicates a status in which the UWB channel is used. The processing module is further configured to: after obtaining the UWB channel by contention, perform ranging or sensing based on the fourth information in a period during which the UWB channel is not used.

In a possible implementation, the receiving module is specifically configured to broadcast the first information over a first channel, where a frequency range of the first channel is 5730 MHz to 5735 MHz.

In a possible implementation, the receiving module is further configured to broadcast first channel using information, where the first channel using information includes information that the initiator uses the UWB channel.

In a possible implementation, the receiving module is specifically configured to broadcast the first information over a narrowband mirroring channel corresponding to the UWB channel.

In a possible implementation of the first aspect or the sixth aspect, the first time is after start time of the first using period and before end time of the first using period.

In this implementation, the first time is before the end time of the first using period. The first information may indicate that the UWB apparatus starts to contend for the second using period of the UWB channel before the end time of the first using period. This can improve utilization of the UWB channel.

In a possible implementation of the first aspect or the sixth aspect, the first information includes end time of the first using period or the first time, the first time is before the end time of the first using period, and a time interval between the first time and the end time of the first using period is first duration.

In this implementation, the first information includes the end time of the first using period or the first time, so that a UWB apparatus that receives the first information learns of the end time of the first using period.

In a possible implementation of the first aspect or the sixth aspect, the first information includes the end time of the first using period or the first time, the first time is before the end time of the first using period, and the time interval between the first time and the end time of the first using period is the first duration. In other words, the first time is first duration earlier than the end time of the first using period.

In this implementation, the first information includes the end time of the first using period or the first time, so that the UWB apparatus that receives the first information learns of the end time of the first using period.

In a possible implementation of the first aspect or the sixth aspect, the first information includes the end time of the first using period and the first time, and the first time is before the end time of the first using period.

In this implementation, the first information includes the end time of the first using period and the first time, so that the UWB apparatus that receives the first information quickly and accurately obtains the end time of the first using period and the first time.

It should be noted that the communication apparatus in the sixth aspect may be any apparatus that needs to or can access the UWB channel, for example, an apparatus that can perform sensing or ranging by using the UWB channel.

For technical effect brought by the possible implementations of the sixth aspect, refer to descriptions of the technical effect of the first aspect or the possible implementations of the first aspect.

According to a seventh aspect, embodiments of this application provide a communication apparatus. The communication apparatus has a function of implementing behavior in the method embodiment in the second aspect. The communication apparatus may be a communication device (for example, a mobile phone, a base station, or a laptop), or may be a component (for example, a processor, a chip, or a chip system) of the communication device, or may be a logical module or software that can implement all or some functions of the communication device. The function of the communication apparatus may be implemented by hardware, or may be implemented by hardware by executing corresponding software. The hardware or the software includes one or more modules or units corresponding to the foregoing function. In a possible implementation, the communication apparatus includes an interface module and a processing module. The interface module is configured to broadcast fifth information, where the fifth information indicates that an initiator obtains a third using period of the UWB channel by contention, a time interval between third time and second time is less than a time threshold, the second time is time at which the initiator broadcasts the fifth information, the third time is start time of the third using period, or the third time is end time of the third using period, and a channel used by the interface module to broadcast the fifth information is different from the UWB channel; and the processing module is configured to perform ranging or sensing by using the UWB channel.

In a possible implementation, the interface module is further configured to send seventh information to a responder through unicast, where the seventh information is used by the responder to perform ranging or sensing with the initiator by using the UWB channel.

In a possible implementation, the interface module is further configured to periodically broadcast eighth information, where the eighth information includes end time of the third using period.

In a possible implementation, the processing module is further configured to contend for the UWB channel; and when a time interval between fourth time at which the initiator obtains the UWB channel by contention and fifth time is greater than or equal to the time threshold, the processing module contends for the UWB channel again or contends for the UWB channel again after the interface module sends data, where the fifth time is start time or end time of a fourth using period, and the fourth using period is a period estimated by the initiator for using the UWB channel when the initiator obtains the UWB channel by contention at the fourth time. Optionally, the second time is time at which the initiator obtains the UWB channel by contention.

In a possible implementation, the interface module is further configured to receive sixth information, where the sixth information indicates a status in which the UWB channel is used. The processing module is further configured to: after obtaining the UWB channel by contention, perform ranging or sensing based on the sixth information in a period during which the UWB channel is not used.

In a possible implementation, the interface module is specifically configured to broadcast the fifth information over a first channel, where a frequency range of the first channel is 5730 MHz to 5735 MHz.

In a possible implementation, the interface module is further configured to broadcast second channel using information, where the second channel using information includes information that initiator uses the UWB channel.

In a possible implementation, the interface module is specifically configured to broadcast the fifth information over a narrowband mirroring channel corresponding to the UWB channel. Optionally, a frequency range of the narrowband mirroring channel is 5730 MHz to 5735 MHz.

In a possible implementation, the processing module is further configured to continue to contend for the UWB channel in a process in which the UWB channel is used.

In a possible implementation of the second aspect or the seventh aspect, the fifth information includes end time of the third using period.

In this implementation, the fifth information includes the end time of the third using period, so that a UWB apparatus that receives the fifth information quickly and accurately obtains the end time of the third using period.

In a possible implementation of the second aspect or the seventh aspect, the second time is before start time of the third using period. The time when the initiator obtains the third using period of the UWB channel by contention is before the start time of the third using period. In other words, the initiator starts to contend for the third using period of the UWB channel before the start time of the third using period. This can improve utilization of the UWB channel.

It should be noted that the communication apparatus in the seventh aspect may be any apparatus that needs to or can access the UWB channel, for example, an apparatus that can perform sensing or ranging by using the UWB channel.

For technical effect brought by the possible implementations of the seventh aspect, refer to descriptions of the technical effect of the second aspect or the possible implementations of the second aspect.

According to an eighth aspect, embodiments of this application provide a communication apparatus. The communication apparatus has a function of implementing behavior in the method embodiment in the third aspect. The communication apparatus may be a communication device (for example, a mobile phone, a base station, or a laptop), or may be a component (for example, a processor, a chip, or a chip system) of the communication device, or may be a logical module or software that can implement all or some functions of the communication device. The function of the communication apparatus may be implemented by hardware, or may be implemented by hardware by executing corresponding software. The hardware or the software includes one or more modules or units corresponding to the foregoing function. In a possible implementation, the communication apparatus includes an interface module and a processing module. The interface module is configured to receive first information broadcast by an initiator, where the first information indicates that the initiator obtains a first using period of a UWB channel by contention, and indicates first time, the first time is time of starting to contend for a second using period of the UWB channel, the second using period is after the first using period, and a channel used by the initiator to broadcast the first information is different from the UWB channel; and the processing module is configured to start to contend for the second using period of the UWB channel at the first time.

In a possible implementation, the interface module is further configured to: receive second information sent by the initiator through unicast, where the second information is used by the responder to perform ranging or sensing with the initiator by using the UWB channel; and perform ranging or sensing with the initiator by using the UWB channel.

In a possible implementation, the interface module is further configured to receive third information periodically broadcast by the initiator, where the third information is used to obtain the end time of the first using period or the first time.

In a possible implementation, the processing module is further configured to: after obtaining the UWB channel by contention, perform ranging or sensing based on the first information in a period during which the UWB channel is not used.

In a possible implementation, the interface module is further configured to broadcast fourth information, where the fourth information indicates a status in which the UWB channel is used.

In a possible implementation, the interface module is further configured to receive the first information broadcast by the initiator over a first channel, where a frequency range of the first channel is 5730 MHz to 5735 MHz.

In a possible implementation, the processing module is further configured to stop contending for the UWB channel in response to the first information.

In a possible implementation of the third aspect or the eighth aspect, the first time is after the start time of the first using period and before end time of the first using period.

In this implementation, the first time is before the end time of the first using period. The first information may indicate that a UWB apparatus starts to contend for the second using period of the UWB channel before the end time of the first using period. This can improve utilization of the UWB channel.

In a possible implementation of the third aspect or the eighth aspect, the first information includes end time of the first using period or the first time, the first time is before the end time of the first using period, and a time interval between the first time and the end time of the first using period is first duration.

In this implementation, the first information includes the end time of the first using period or the first time, so that a UWB apparatus that receives the first information quickly and accurately determines the end time of the first using period and the first time.

In a possible implementation of the third aspect or the eighth aspect, the first information includes the end time of the first using period or the first time, the first time is before the end time of the first using period, and the time interval between the first time and the end time of the first using period is the first duration. In other words, the first time is first duration earlier than the end time of the first using period.

In this implementation, the first information includes the end time of the first using period or the first time, so that the UWB apparatus that receives the first information learns of the end time of the first using period.

In a possible implementation of the third aspect or the eighth aspect, the first information further indicates a status in which the UWB channel is used by the initiator.

In this implementation, the first information further indicates a status in which the UWB channel is used by the initiator, so that the UWB apparatus that receives the first information performs ranging or sensing in a period during which the UWB channel is not used.

It should be noted that the communication apparatus in the eighth aspect may be any apparatus that needs to or can access the UWB channel, for example, an apparatus that can perform sensing or ranging by using the UWB channel.

For technical effect brought by the possible implementations of the eighth aspect, refer to descriptions of the technical effect of the third aspect or the possible implementations of the third aspect.

According to a ninth aspect, embodiments of this application provide a communication apparatus. The communication apparatus has a function of implementing behavior in the method embodiment in the fourth aspect. The communication apparatus may be a communication device (for example, a mobile phone, a base station, or a laptop), or may be a component (for example, a processor, a chip, or a chip system) of the communication device, or may be a logical module or software that can implement all or some functions of the communication device. The function of the communication apparatus may be implemented by hardware, or may be implemented by hardware by executing corresponding software. The hardware or the software includes one or more modules or units corresponding to the foregoing function. In a possible implementation, the communication apparatus includes an interface module and a processing module. The interface module is configured to receive fifth information broadcast by an initiator, where the fifth information indicates that the initiator obtains a third using period of the UWB channel by contention, a time interval between third time and second time is less than a time threshold, the second time is time at which the initiator broadcasts the fifth information, the third time is start time of the third using period, or the third time is end time of the third using period, and a channel used by the initiator to broadcast the fifth information is different from the UWB channel; and the processing module is configured to determine, based on the fifth information, that the initiator obtains the third using period by contention.

In a possible implementation, the interface module is further configured to receive seventh information sent by the initiator through unicast, where the seventh information is used by the responder to perform ranging or sensing with the initiator by using the UWB channel.

In a possible implementation, the interface module is further configured to receive eighth information periodically broadcast by the initiator, where the eighth information includes end time of the third using period.

In a possible implementation, the interface module is further configured to send sixth information, where the sixth information indicates a status in which the UWB channel is used.

In a possible implementation, the interface module is specifically configured to receive the fifth information broadcast by the initiator over a first channel, where a frequency range of the first channel is 5730 MHz to 5735 MHz.

In a possible implementation, the interface module is specifically configured to receive the fifth information that is broadcast by the initiator over a narrowband mirroring channel corresponding to the UWB channel.

In a possible implementation, the interface module is specifically configured to receive second channel using information broadcast by the initiator, where the second channel using information includes information that the initiator uses the UWB channel. The processing module is further configured to perform ranging or sensing based on the second channel using information in a period during which the UWB channel is not used.

In a possible implementation, the processing module is further configured to continue to contend for the UWB channel in a process in which the UWB channel is used.

In a possible implementation, the processing module is further configured to: when a time interval between fifth time at which the UWB channel is obtained by contention and sixth time is greater than or equal to the time threshold, contend for the UWB channel again or contending for the UWB channel again after sending data through the interface module, where the sixth time is start time of fifth using period, or the sixth time is end time of the fifth using period, and the fifth using period is later than the third using period.

In a possible implementation of the fourth aspect or the ninth aspect, the fifth information includes end time of the third using period.

In this implementation, the fifth information includes the end time of the third using period, and the end time of the third using period may be quickly and accurately obtained by the UWB apparatus based on the fifth information.

In a possible implementation of the fourth aspect or the ninth aspect, the second time is before start time of the third using period.

The initiator starts to contend for the third using period of the UWB channel before the start time of the third using period. This can improve utilization of the UWB channel.

It should be noted that the communication apparatus in the ninth aspect may be any apparatus that needs to or can access the UWB channel, for example, an apparatus that can perform sensing or ranging by using the UWB channel.

For technical effect brought by the possible implementations of the ninth aspect, refer to descriptions of the technical effect of the fourth aspect or the possible implementations of the fourth aspect.

According to a tenth aspect, embodiments of this application provide a communication apparatus. The communication apparatus has a function of implementing behavior in the method embodiment in the fifth aspect. The communication apparatus may be a communication device (for example, a mobile phone, a base station, or a laptop), or may be a component (for example, a processor, a chip, or a chip system) of the communication device, or may be a logical module or software that can implement all or some functions of the communication device. The function of the communication apparatus may be implemented by hardware, or may be implemented by hardware by executing corresponding software. The hardware or the software includes one or more modules or units corresponding to the foregoing function. In a possible implementation, the communication apparatus includes an interface module and a processing module. The interface module is configured to receive fourth information, and the fourth information indicates a status in which the UWB channel is used or the UWB channel is not used. The processing module is configured to: after obtaining the UWB channel by contention, perform ranging or sensing with a responder based on the fourth information and in a period during which the UWB channel is not used.

In a possible implementation, the interface module is further configured to broadcast tenth information, where the tenth information indicates a status in which the UWB channel is used or the UWB channel is not used.

It should be noted that the communication apparatus in the ninth aspect may be any apparatus that needs to or can access the UWB channel, for example, an apparatus that can perform sensing or ranging by using the UWB channel.

For technical effect brought by the possible implementations of the tenth aspect, refer to descriptions of the technical effect of the fifth aspect or the possible implementations of the fifth aspect.

According to an eleventh aspect, embodiments of this application provide another communication apparatus. The communication apparatus includes a processor. The processor is coupled to a memory. The memory is configured to store a program or instructions. When the program or the instructions is/are executed by the processor, the communication apparatus is enabled to perform the method shown in any one of the first aspect to the possible implementations of the fifth aspect; or when the program or the instructions is/are executed by the processor, the communication apparatus is enabled to perform the method shown in any one of the second aspect or the possible implementations of the second aspect; or when the program or the instructions is/are executed by the processor, the communication apparatus is enabled to perform the method shown in any one of the third aspect or the possible implementations of the third aspect; or when the program or the instructions is/are executed by the processor, the communication apparatus is enabled to perform the method shown in any one of the fourth aspect or the possible implementations of the fourth aspect; or when the program or the instructions is/are executed by the processor, the communication apparatus is enabled to perform the method shown in any one of the fifth aspect or the possible implementations of the fifth aspect.

In embodiments of this application, in a process of performing the foregoing method, a process of sending information (or a signal) in the foregoing method may be understood as a process of outputting information based on instructions of the processor. When the information is output, the processor outputs the information to a transceiver, so that the transceiver transmits the information. After the information is output by the processor, the information may further require other processing, and then reaches the transceiver. Similarly, when the processor receives input information, the transceiver receives the information, and inputs the information into the processor. Further, after the transceiver receives the information, other processing may need to be performed on the information before the information is input into the processor.

An operation such as sending and/or receiving involved in the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method shown in the first aspect or any possible implementation of the first aspect.

In a possible implementation, the memory is located outside the communication apparatus. In a possible implementation, the memory is located inside the communication apparatus.

In a possible implementation, the processor and the memory may be further integrated into one component, that is, the processor and the memory may be further integrated together.

In a possible implementation, the communication apparatus further includes a transceiver. The transceiver is configured to receive a signal, send a signal, or the like.

According to a twelfth aspect, this application provides another communication apparatus. The communication apparatus includes a processing circuit and an interface circuit. The interface circuit is configured to obtain data or output data. The processing circuit is configured to perform the corresponding method according to the first aspect or any possible implementation of the first aspect; or the processing circuit is configured to perform the corresponding method according to the second aspect or any possible implementation of the second aspect; or the processing circuit is configured to perform the corresponding method according to the third aspect or any possible implementation of the third aspect; or the processing circuit is configured to perform the corresponding method according to the fourth aspect or any possible implementation of the fourth aspect; or the processing circuit is configured to perform the corresponding method according to the fifth aspect or any possible implementation of the fifth aspect.

According to a thirteenth aspect, this application provides a computer-readable storage medium, where the computer-readable storage medium stores a computer program. The computer program includes program instructions. When the program instructions are executed, a computer is enabled to perform the method according to any one of the first aspect or the possible implementations of the first aspect; or when the program instructions are executed, a computer is enabled to perform the method according to any one of the second aspect or the possible implementations of the second aspect; or when the program instructions are executed, a computer is enabled to perform the method according to any one of the third aspect or the possible implementations of the third aspect; or when the program instructions are executed, a computer is enabled to perform the method according to any one of the fourth aspect or the possible implementations of the fourth aspect; or when the program instructions are executed, a computer is enabled to perform the method according to any one of the fifth aspect or the possible implementations of the fifth aspect.

According to a fourteenth aspect, this application provides a computer program product, where the computer program product includes a computer program, and the computer program includes program instructions. When the program instructions are executed, a computer is enabled to perform the method according to any one of the first aspect or the possible implementations of the first aspect; or when the program instructions are executed, a computer is enabled to perform the method according to any one of the second aspect or the possible implementations of the second aspect; or when the program instructions are executed, a computer is enabled to perform the method according to any one of the third aspect or the possible implementations of the third aspect; or when the program instructions are executed, a computer is enabled to perform the method according to any one of the fourth aspect or the possible implementations of the fourth aspect; or when the program instructions are executed, a computer is enabled to perform the method according to any one of the fifth aspect or the possible implementations of the fifth aspect.

According to a fifteenth aspect, this application provides a communication system, including the communication apparatus according to any one of the sixth aspect or the possible implementations of the seventh aspect and the communication apparatus according to the eighth aspect or the ninth aspect. The communication information may further include the communication apparatus according to any possible implementation of the tenth aspect.

## BRIEF DESCRIPTION OF DRAWINGS

To describe technical solutions in embodiments of this application or in the background more clearly, the following briefly describes accompanying drawings for describing embodiments of this application or the background.

FIG. 1 is a diagram of UWB signal segmented transmission according to an embodiment of this application;
FIG. 2 illustrates an example of a basic ranging procedure between an initiator and a responder;
FIG. 3 is a diagram of a topology of a UWB ranging system according to an embodiment of this application;
FIG. 4 is a diagram of a topology of another UWB ranging system according to an embodiment of this application;
FIG. 5 is a diagram of a ranging scenario according to an embodiment of this application;
FIG. 6 is an interaction flowchart of a UWB channel access method according to an embodiment of this application;
FIG. 7A and FIG. 7B show examples of a first using period and a second using period according to this application;
FIG. 8A and FIG. 8B show examples of using periods of a UWB channel according to an embodiment of this application;
FIG. 9 is an interaction flowchart of another UWB channel access method according to an embodiment of this application;
FIG. 10 shows an example of a ranging round and a ranging slot according to this application;
FIG. 11 is a diagram of a UWB channel access process according to an embodiment of this application;
FIG. 12 is a diagram of another UWB channel access process according to an embodiment of this application;
FIG. 13 is an interaction flowchart of still another UWB channel access method according to an embodiment of this application;
FIG. 14 is a diagram of still another UWB channel access process according to an embodiment of this application;
FIG. 15 is an interaction flowchart of yet another UWB channel access method according to an embodiment of this application;
FIG. 16 is an interaction flowchart of still yet another UWB channel access method according to an embodiment of this application;
FIG. 17A to FIG. 17C are diagrams of a UWB channel access process according to an embodiment of this application;
FIG. 18 is an interaction flowchart of a further UWB channel access method according to an embodiment of this application;
FIG. 19A to FIG. 19C are diagrams of a UWB channel access process according to an embodiment of this application;
FIG. 20 is an interaction flowchart of a still further UWB channel access method according to an embodiment of this application;
FIG. 21A and FIG. 21B are diagrams of a UWB channel access process according to an embodiment of this application;
FIG. 22 is a diagram of a structure of a communication apparatus 2200 according to an embodiment of this application;
FIG. 23 is a diagram of a structure of another communication apparatus 230 according to an embodiment of this application; and
FIG. 24 is a diagram of a structure of still another communication apparatus 240 according to an embodiment of this application.

**DESCRIPTION OF EMBODIMENTS**

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In this application, a term such as "example" or "for example" is used to represent giving an example, an illustration, or a description. Any embodiment or design scheme described with "example", "in an example", or "for example" in this application should not be explained as being more preferred or having more advantages than another embodiment or design scheme. Exactly, use of the term "example", "in an example", "for example", or the like is intended to present a related concept in a specific manner.

"Embodiment" mentioned in this specification mean that a specific feature, structure, or characteristic described in combination with this embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

It may be understood that in embodiments of this application, "B corresponding to A" indicates that there is a correspondence between A and B, and B may be determined based on A. However, it should be further understood that determining (or generating) B according to (or based on) A does not mean that B is determined (or generated) according to (or based on) A only, and B may also be determined (or generated) according to (or based on) A and/or other information.

The following first describes terms and technical solutions in embodiments of this application.

1. UWB signal segmented transmission

To prevent interference from an ultra-wideband (UWB) system to a narrowband system during operating, regulations strictly limit a power spectral density of a UWB signal (namely, a signal sent by using a UWB). Rules are as follows.

    (1) An average value of maximum power spectral densities (power spectral density, PSD) of sent UWB signals within one millisecond cannot be greater than 41.3 dBm per megahertz.
    (2) Maximum power of the sent UWB signal in any 50 MHz bandwidth cannot exceed 1 milliwatt.

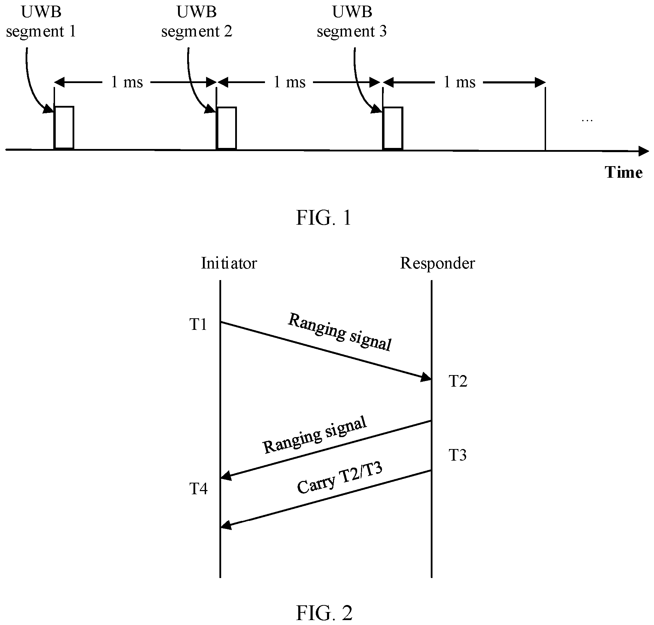

Rule (1) limits total emission energy of the UWB signals within 1 millisecond (37 nJ in 500 MHz bandwidth). The UWB signal is sent in a shorter time, so that instantaneous power of sending the UWB signal can be increased, and a coverage area of the signal can be enlarged. Therefore, in some scenarios in which sending power needs to be increased, a sending end splits a to-be-sent UWB signal into a plurality of segments, each segment of the signal (namely, each segment) is less than 1 millisecond in terms of time length, and only one segment is sent in each millisecond. FIG. 1 is a diagram of UWB signal segmented transmission according to an embodiment of this application. In FIG. 1, a UWB segment 1, a UWB segment 2, and a UWB segment 3 represent three segments obtained by splitting one UWB signal, each segment is less than 1 millisecond in terms of time length, and a time interval between two segments adjacent in time is equal to 1 ms (which may be greater than 1 ms). Time indicates a time axis. FIG. 1 shows only the three UWB segments, namely, the UWB segment 1, the UWB segment 2, and the UWB segment 3. One UWB signal may be split to obtain more or fewer (for example, two) segments. This is not limited in this application. Splitting one UWB signal into a plurality of segments for transmission may increase instantaneous power of the UWB signal, but the instantaneous power of the UWB signal cannot increase infinitely.

Rule (2) actually limits a power increase multiple of UWB segmented transmission.

2. Basic principle of ranging

A basic principle of ranging is as follows: Two ranging parties calculate a distance between the two parties by using round-trip time of a measurement message (for example, a ranging signal). The ranging parties include an initiator and a responder. An initiator may have one or more responders. FIG. 2 illustrates an example of a basic ranging procedure between an initiator and a responder. As shown in FIG. 2, an initiator sends a ranging signal 1 at a moment T1, and the ranging signal 1 arrives at a responder at a moment T2. After processing the received ranging signal 1, the responder sends a ranging signal 2 at a moment T3, and the ranging signal 2 arrives at the initiator at a moment T4. After sending the ranging signal, the responder sends a data frame carrying T2 and T3. The ranging signal is obtained after pulse shaping and modulation are performed on a ranging sequence, for example, pulse position modulation (pulse position modulation, PPM) or pulse amplitude modulation (pulse amplitude modulation, PAM). The distance between the sender and the responder may meet the following formula:

$$d = \frac{(T_2 - T_1) + (T_4 - T_3)}{2} * c \quad (1);$$

c represents a speed of light, and d represents the distance between the sender and the responder. It should be understood that FIG. 2 shows only a basic ranging principle, and there may be many variations in practice. For example, if the ranging parties agree on a time (T3-T2) in advance, the responder carries only T2 or T3 in the data frame.

A segment-based ranging procedure (namely, a procedure in which one ranging signal is split into a plurality of segments for ranging) is basically the same as the ranging procedure shown in FIG. 2. A difference lies in that an initiator and a responder send a plurality of rounds of ranging signals for ranging. In this application, UWB ranging may use a segment-based ranging method, or may not use a segment-based ranging method. The accompanying drawings of subsequent embodiments may be represented in a form of segment-based ranging, and should not be understood as that only a segment-based ranging method can be used. That is, the segment-based ranging form shown in the accompanying drawings of embodiments may be replaced with a form in which segment-based ranging is not used.

3. UWB apparatus

In this application, a UWB apparatus refers to any apparatus that needs to or can access a UWB channel, for example, an apparatus that can perform sensing or ranging by using the UWB channel. The UWB apparatus may support a narrowband communication standard, like a Wi-Fi standard (namely, the 802.11 series standards), a Bluetooth standard, or Zigbee, and may further support an ultra-bandwidth communication standard, like the IEEE 802.15.4z standard. In this application, the initiator and the response frame may be UWB apparatuses. The UWB apparatus may be a terminal, or may be an access network device.

The terminal is a device that has a wireless transceiver function. The terminal may communicate with one or more core network (core network, CN) devices (or referred to as core devices) by using an access network device (or referred to as an access device) in a radio access network (radio access network, RAN). The terminal may be deployed on land, including an indoor device, an outdoor device, a handheld device, or a vehicle-mounted device; or may be deployed on water (for example, on a ship); or may be deployed in the air (for example, on a plane, a balloon, or a satellite). In embodiments of this application, the terminal may also be referred to as a terminal device or user equipment (user equipment, UE), and may be a mobile phone (mobile phone), a mobile station (mobile station, MS), a pad (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal in transportation safety (transportation safety), a wireless terminal device in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, and the like. The terminal may include various handheld devices having a wireless communication function, vehicle-mounted devices, wearable devices, computing devices, or other processing devices connected to a wireless modem. Optionally, the terminal may be a handheld device (handset) having a wireless communication function, a vehicle-mounted device, a wearable device, or a terminal in the Internet of Things or the Internet of Vehicles, a terminal in any form in 5G and an evolved communication system after 5G, and the like. This is not limited in this application.

The access network device may be any device that has the wireless transceiver function and can communicate with a terminal, for example, a radio access network (radio access network, RAN) node that connects the terminal to a wireless network. Currently, examples of some RAN nodes include a macro base station, a micro base station (also referred to as a small station), a relay station, an access point, a gNB, a transmission reception point (transmission reception point, TRP), an evolved NodeB (evolved NodeB, eNB), a radio network controller (radio network controller, RNC), a home base station (for example, a home evolved NodeB, or a home NodeB, HNB), a base band unit (base band unit, BBU), a Wi-Fi access point (access point, AP), an integrated access and backhaul (integrated access and backhaul, IAB), and the like.

4. Wi-Fi channel division

According to the development of current standards, there is a high probability that a narrowband channel is selected in a UNII-3 frequency band, that is, 5725 MHz to 5850 MHz. Table 1 shows division of Wi-Fi channels in the UNII-3 frequency band. As shown in Table 1, the first column is a channel number, the second column is a center frequency, the third column is a frequency range, and the fourth to the seventh columns are all bandwidths. UNII-3 is an unlicensed frequency band. Wi-Fi channel division on this frequency band is shown in Table 1. 20, 40, 80, and 160 respectively represent Wi-Fi channels with different bandwidths. For a specific frequency range of each channel, refer to the third column in FIG. 1.

**Table 1**

| Channel number | Center frequency (MHz) | Frequency range (MHz) | Bandwidth (MHz) | | | |
|---|---|---|---|---|---|---|
| 144 | 5720 | 5710 to 5730 | 20 | | | |
| 149 | 5745 | 5735 to 5755 | 20 | | | |
| 151 | 5755 | 5735 to 5775 | | 40 | | |
| 153 | 5765 | 5755 to 5775 | 20 | | | |
| 155 | 5775 | 5735 to 5815 | | | 80 | |
| 157 | 5785 | 5775 to 5795 | 20 | | | |
| 159 | 5795 | 5775 to 5815 | | 40 | | |
| 161 | 5805 | 5795 to 5815 | 20 | | | |
| 163 | 5815 | 5735 to 5895 | | | | 160 |
| 165 | 5825 | 5815 to 5835 | 20 | | | |
| 167 | 5835 | 5815 to 5855 | | 40 | | |
| 169 | 5845 | 5835 to 5855 | 20 | | | |

As described in the background, a currently used UWB channel access solution has low UWB channel access efficiency. Therefore, a UWB channel access solution with higher access efficiency needs to be studied.

In a UWB channel access solution provided in this application, contention for UWB channel is transferred to a narrowband channel in advance. To be specific, a UWB apparatus completes contention for the UWB channel before the UWB channel is idle (that is, in a process in which the UWB channel is occupied). In this way, once the UWB channel is idle, the UWB apparatus that obtains the UWB channel by contention can immediately use the UWB channel. This improves UWB channel access efficiency and reduces monitoring duration. In another UWB channel access solution provided in this application, a UWB apparatus (or referred to as a UWB device) contends for a UWB channel, and a UWB apparatus that fails to obtain the UWB channel by contention stops sensing (which may be replaced with listening) the channel based on broadcast information sent by the UWB apparatus that obtains the UWB channel by contention, and determines start time of next contention for the UWB channel. This can improve access efficiency of the UWB channel, reduce sensing duration, and avoid interference between UWB signals. In addition, in another UWB channel access solution provided in this application, when the UWB channel is used by the another UWB apparatus, the UWB apparatus performs ranging or sensing in a period during which the UWB channel is not used. This can improve utilization of the channel.

The UWB channel access solution provided in this application is applied to a wireless local area network system that supports the 802.11 series protocols, for example, a next-generation Wi-Fi protocol of IEEE802.11ax, like 802.11be, Wi-Fi 7, or extremely high-throughput (extremely high-throughput, EHT), and for another example, a next-generation protocol of 802. 11be, like Wi-Fi 8, is also applied to an ultra-bandwidth UWB-based wireless personal area network system, is also applied to a sensing sensing system, and is also applied to the Internet of Vehicles, machine type communication (machine type communication, MTC), long term evolution-machine (long term evolution-machine, LTE-M), machine to machine communication (machine to machine, M2M), vehicle-to-everything (vehicle-to-everything, V2X) communication, vehicle to vehicle (vehicle to vehicle, V2V) communication, long term evolution-vehicle (long term evolution-vehicle, LTE-V), a long term evolution (long term evolution, LTE) system, an LTE frequency division duplex (frequency division duplex, FDD) system, an LTE time division duplex (time division duplex, TDD), a universal mobile telecommunication system (universal mobile telecommunication system, UMTS), a worldwide interoperability for microwave access (worldwide interoperability for microwave access, WiMAX) communication system, a 5th generation (5th generation, 5G) communication system, new radio (new radio, NR), and another future communication system, for example, 6G.

The UWB channel access solution provided in this application is applied to any scenario in which the UWB channel needs to be accessed, for example, a scenario in which ranging or sensing is performed by using the UWB channel. The UWB channel access solution provided in this application is not limited to a ranging scenario or a sensing scenario, but is also be applied to another scenario. The UWB channel access solution provided in this application mainly resolves how to efficiently access the UWB channel, that is, improve UWB channel access efficiency. After the UWB apparatus accesses the UWB channel, what is performed by using the UWB channel is not limited in this application. For example, after accessing the UWB channel, the UWB apparatus may perform ranging or sensing by using the UWB channel. A difference between ranging and sensing performed by the UWB apparatus by using the UWB channel lies in that a sent signal and a corresponding signal processing method may be different. The following mainly uses a ranging scenario as an example to describe the UWB channel access solution provided in this application.

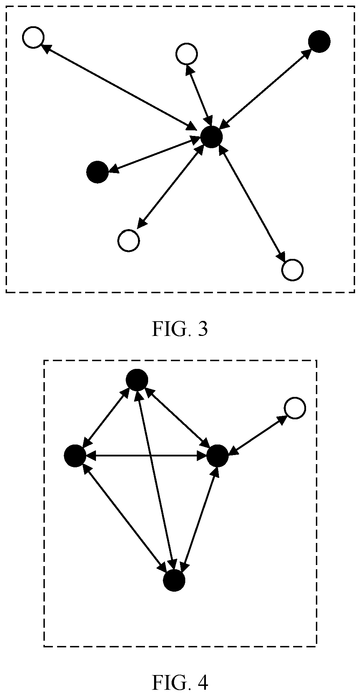

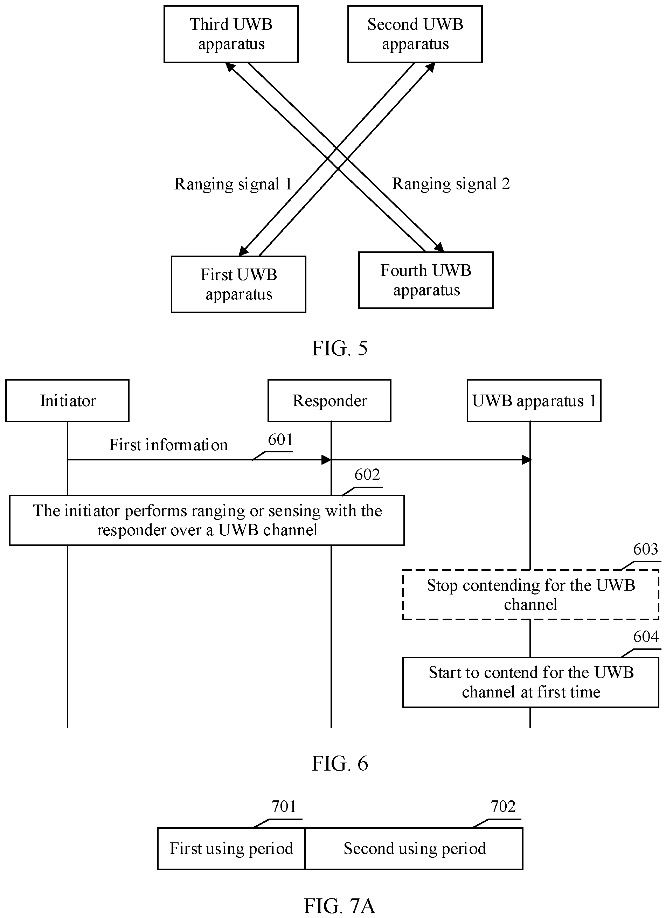

The UWB channel access solution provided in this application is applicable to one or more UWB ranging systems, and the UWB ranging system may operate in a star topology or a point-to-point topology. In the star topology, communication between the same or more other devices of a central control node is involved. In the point-to-point topology, communication between different devices is involved. One or more nodes in the UWB ranging system are UWB apparatuses. FIG. 3 is a diagram of a topology of a UWB ranging system according to an embodiment of this application. The topology in FIG. 3 is an example of a star topology. FIG. 4 is a diagram of a topology of another UWB ranging system according to an embodiment of this application. The topology in FIG. 4 is an example of a point-to-point topology. In FIG. 3 and FIG. 4, a black dot represents a full function device (full function device), a white dot represents a reduced function device (reduced function device), and a straight line with an arrow represents a communication flow (communication flow). FIG. 5 is a diagram of a ranging scenario according to an embodiment of this application. As shown in FIG. 5, the ranging scenario includes: two or more UWB apparatuses (FIG. 5 shows only four UWB apparatuses, that is, a first UWB apparatus, a second UWB apparatus, a third UWB apparatus, and a fourth UWB apparatus). A ranging signal 1 is transmitted between the first UWB apparatus and the second UWB apparatus by using a UWB channel, and a ranging signal 2 is transmitted between the third UWB apparatus and the fourth UWB apparatus by using a same UWB channel. In the ranging scenario, a plurality of UWB apparatuses may need to access the UWB channel at the same time to perform ranging. When the plurality of UWB apparatuses access the UWB channel at the same time, a problem of mutual interference between UWB signals may occur. Therefore, a UWB channel access solution that can avoid mutual interference between UWB signals in the ranging scenario needs to be studied. Similarly, in the sensing scenario and other scenarios where the UWB channel needs to be accessed, mutual interference between the UWB signals needs to be avoided. According to the UWB channel access solution provided in this application, mutual interference between the UWB signals can be avoided, and UWB channel access efficiency can be improved. The following describes a UWB channel access solution provided in this application with reference to the accompanying drawings.

FIG. 6 is an interaction flowchart of a UWB channel access method according to an embodiment of this application. As shown in FIG. 6, the method includes the following steps.

601: An initiator broadcasts first information.

The initiator is a UWB apparatus. Corresponding to broadcasting the first information by the initiator, one or more UWB apparatuses receive the broadcast first information. The one or more UWB apparatuses may include one or more responders corresponding to the initiator. FIG. 6 shows that a responder and a UWB apparatus 1 receive the first information broadcast by the initiator. FIG. 6 shows an example of the UWB apparatus receiving the first information. This should not be understood as that only one responder and the UWB apparatus 1 receive the first information broadcast by the initiator. The responder and the UWB apparatus receiving the first information shown in the subsequent accompanying drawings should also be understood as an example of the UWB apparatus receiving the first information, and should not be understood as that only one responder and the UWB apparatus 1 receive the first information broadcast by the initiator. It should be understood that the UWB apparatus that receives the first information broadcast by the initiator may include only one or more responders, or may include a responder and a plurality of UWB apparatuses, or may include one or more UWB apparatuses (that is, no responder is included). In other words, the UWB apparatus that receives the first information broadcast by the initiator is not limited in this application.

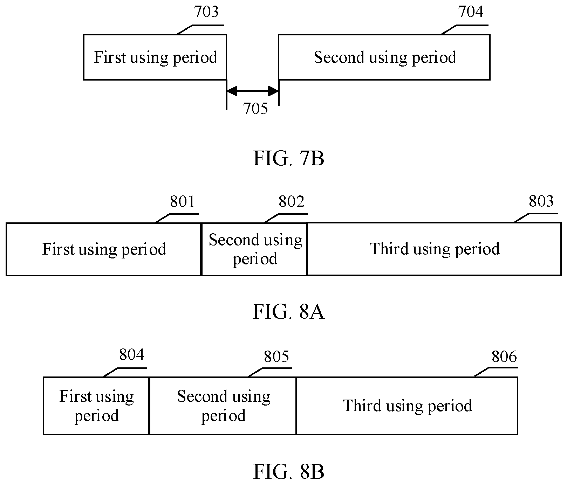

The first information indicates that the initiator obtains a first using period of the UWB channel by contention, and indicates first time. The first time is time of starting to contend for a second using period of the UWB channel, and the second using period is after the first using period. Duration of the first using period is the same as or different from duration of the second using period. Optionally, end time of the first using period is the same as start time of the second using period, so that there is no gap between two using periods adjacent in time of the UWB channel, and the UWB channel can be fully utilized. Optionally, the end time of the first using period is before the start time of the second using period. For example, the start time of the second using period is 1 ms, 2 ms, or the like after the end time of the first using period. FIG. 7A and FIG. 7B show examples of a first using period and a second using period according to this application. As shown in FIG. 7A, 701 indicates a first using period, 702 indicates a second using period, and end time of the first using period is start time of the second using period, that is, the first using period and the second using period are time periods that are continuous in time. As shown in FIG. 7B, 703 indicates a first using period, 704 indicates a second using period, 705 indicates a time interval between end time of the first using period and start time of the second using period, and the end time of the first using period is before the start time of the second using period, that is, the first using period and the second using period are time periods that are not continuous in time.

In a possible implementation, the first time is after the start time of the first using period and before the end time of the first using period. In this implementation, the first information may indicate that the UWB apparatus starts to contend for the second using period of the UWB channel before the end time of the first using period. This can improve utilization of the UWB channel.

In a possible implementation, the end time of the first using period is determined by the initiator based on duration in which the initiator needs to use the UWB channel, rather than a fixed moment. Similarly, the start time of the first using period is determined by a UWB apparatus that obtains, by contention, a using period previous to the first using period based on duration in which the UWB channel needs to be used, rather than a fixed moment. Similarly, neither the start time nor end time of the second using period is fixed. The start time of the second using period may be the same as the end time of the first using period, and the end time of the second using period is decided by the UWB apparatus that obtains the second using period of the UWB channel by contention. In other words, the first using period and the second using period are not periodic, but are determined by the UWB apparatus that obtains the UWB channel by contention based on duration in which the UWB channel is required. FIG. 8A and FIG. 8B show examples of using periods of a UWB channel according to an embodiment of this application. As shown in FIG. 8A, 801 represents a first using period, 802 represents a second using period, and 803 represents a third using period, namely, a using period after the second using period. Duration of the first using period is greater than duration of the second using period, and the duration of the second using period is less than duration of the third using period. As shown in FIG. 8B, 804 represents a first using period, 805 represents a second using period, and 806 represents a third using period, namely, a using period after the second using period. Duration of the first using period is less than duration of the second using period, and the duration of the second using period is less than duration of the third using period. FIG. 8A and FIG. 8B show merely examples of the using periods of the UWB channel. Duration of each using period of the UWB channel is determined by a UWB apparatus that actually obtains the using period by contention, rather than being pre-specified. Optionally, duration of each using period of the UWB channel does not exceed maximum duration, and the maximum duration may be a value specified in a standard. In practice, different UWB apparatuses use the UWB channel for different duration. For example, a UWB apparatus that uses a UWB channel for ranging and a UWB apparatus that uses the UWB channel for sensing use the UWB channel for different duration. If the using periods of the UWB channel are periodic, that is, durations of different using periods are equal, some UWB apparatuses may only need a part of one using period, and some other UWB apparatuses may not be able to implement their own services (for example, sensing) by using only one using period. It can be learned that, when the using periods of the UWB channel contended for by the UWB apparatus are periodic, utilization of the UWB channel is low. In an existing UWB channel access solution, using periods of a UWB channel contended for by the UWB apparatus are periodic, and utilization of the UWB channel in this solution is low. In this implementation, the end time of the first using period is determined by the initiator based on duration in which the initiator needs to use the UWB channel. Therefore, the duration of the first using period is closer to duration in which the initiator actually needs to use the UWB channel, and utilization of the UWB channel is high.

602: The initiator performs ranging or sensing with the responder over the UWB channel.

A channel used by the initiator to broadcast the first information is different from the UWB channel.

For example, the initiator performs ranging with one or more responders corresponding to the initiator over the UWB channel. Refer to FIG. 1.

Step 602 may be replaced with that the initiator performs a processing procedure other than ranging and sensing with the responder of the initiator over the UWB channel.

In a possible implementation, the initiator corresponds to a plurality of responders, and each responder may perform ranging or sensing with the initiator by using the UWB channel. For example, the initiator simultaneously measures distances from a plurality of different UWB apparatuses over the UWB channel. For another example, the initiator simultaneously senses a plurality of different UWB apparatuses or objects over the UWB channel. Herein, simultaneously may also be understood as in a continuous time period. The object herein may be an element integrated with the UWB transmission function.

In a possible implementation, when the initiator fails to obtain the UWB channel by contention, the initiator performs the following operation: receiving fourth information, where the fourth information indicates a status in which the UWB channel is used; and after obtaining the UWB channel by contention, the initiator performs ranging or sensing based on the fourth information in a period during which the UWB channel is not used. Obtaining the UWB channel by contention herein may be that the initiator backs off to 0. In this application, backing off to 0 may be replaced with a count being 0 or counting down to 0. An example of C1 (one UWB apparatus) and C2 (another UWB apparatus) backoff is as follows: C1 and C2 start contention at the same time. C1 randomly selects backoff duration T1, C2 randomly selects backoff duration T2. T2>T1. C1 and C2 perform carrier sensing in each slot. When a channel is idle, counting down (for example, 1 is subtracted) is performed. Upon counting down to 0, it is considered that the channel is obtained by contention. Therefore, C1 obtains the channel by contention after T1 slots, and C2 counts down to (T2-T1). Similarly, in a using period in which no UWB channel is obtained by contention, any UWB apparatus may perform ranging or sensing in a period during which the UWB channel is not used. In this implementation, utilization of the UWB channel and efficiency of accessing the UWB channel can be improved.

603: The UWB apparatus 1 stops contending for the UWB channel.

Step 604 is optional but not mandatory. After receiving the first information, the UWB apparatus 1 may stop contending for the UWB channel, thereby reducing power consumption.

604: The UWB apparatus 1 starts to contend for the UWB channel at the first time.

The UWB apparatus 1 (non-responder) is merely an example of one UWB apparatus that receives the broadcast first information. Step 604 may be replaced with that a plurality of UWB apparatuses start to contend for the UWB channel at the first time, where the plurality of UWB apparatuses may be understood as UWB apparatuses that need to access the UWB channel. Step 604 is optional but not mandatory. It should be understood that, when the UWB apparatus 1 does not receive the first information or the UWB apparatus 1 does not need to contend for the second using period of the UWB channel, the UWB apparatus 1 does not need to perform step 604. The UWB apparatus 1 may use a distributed coordination function (distributed coordination function, DCF) mechanism of Wi-Fi, or may use a slotted carrier sense multiple access (carrier sense multiple access with collision avoid, slotted CSMA/CA) or an unslotted carrier sense multiple access (unslotted CSMA/CA) mechanism specified in a wireless personal area network (wireless personal area network, WPAN), or another contention backoff mechanism, to contend for the second using period of the UWB channel.

In a possible implementation, all UWB apparatuses use a same contention mechanism to contend for the using period of the UWB channel, to ensure that all UWB apparatuses have a same opportunity to access the UWB channel. In a possible implementation, the UWB apparatuses use different contention mechanisms to contend for the using period of the UWB channel, to ensure that some UWB apparatuses have higher opportunities to access the UWB channel. It should be understood that a specific manner used by the UWB apparatus to contend for the UWB channel may be determined based on an actual application scenario, to meet requirements of different application scenarios.

In a possible implementation, after receiving the first information, the UWB apparatus 1 may stop contending for the UWB channel, so that power consumption and listening duration can be reduced.

In a possible implementation, after obtaining the UWB channel by contention, the UWB apparatus 1 performs ranging or sensing based on the first information and in a period during which the UWB channel is not used. For example, the UWB apparatus 1 contends for the UWB channel by using a contention backoff mechanism, and after backing off to 0, performs ranging or sensing based on the foregoing first information in the period during which the foregoing UWB channel is not used. In this implementation, ranging or sensing is performed in the period during which the UWB channel is not used. This can improve utilization of the UWB channel. The UWB apparatus 1 may further broadcast fourth information, where the fourth information indicates a status in which the UWB channel is used by the initiator and a status in which the UWB channel is used by the UWB apparatus 1. The UWB apparatus that receives the fourth information may obtain, based on the fourth information, the period during which the UWB channel is not used, and further perform ranging or sensing in the period during which the UWB channel is not used.

In a possible implementation, both duration of the first using period and duration of the second using period are less than or equal to a first threshold. The first threshold may be 5 ms, 10 ms, or the like. The first threshold may be configured based on an actual requirement. This is not limited in this application. If duration of each using period of the UWB channel is not limited, a problem that the UWB channel is occupied by a UWB apparatus for a long time may occur, where the UWB apparatus may be an attacker, or may be faulty. For example, when the UWB apparatus that obtains the UWB channel by contention is faulty, an error occurs in broadcast information. As a result, another UWB apparatus cannot use the UWB channel for a long time. For another example, an attacker broadcasts information, causing that another UWB apparatus cannot use the UWB channel for a long time. In this implementation, maximum duration of the using period of the UWB channel obtained by contention by the UWB apparatus is limited and is less than the first threshold, to avoid a problem that another UWB apparatus cannot use the UWB channel for a long time because a UWB apparatus uses the UWB channel for a long time. To prevent an excessively long first using period of the UWB channel, the UWB apparatus 1 that receives the first information may execute the following operations: After determining, based on the first information broadcast by the initiator, that the duration of the first using period is greater than the first threshold, the UWB apparatus 1 may continue to contend for the first using period of the UWB channel. That is, when the UWB apparatus 1 (any UWB apparatus) that receives the first information determines that the duration of the first using period is greater than a time threshold 1, it may be considered that the first information is invalid. To be specific, it is not considered that the initiator obtains the first using period by contention, and contention for the first using period may continue.

In embodiments of this application, the initiator broadcasts the first information, to indicate another UWB apparatus that the initiator obtains the first using period of the UWB channel by contention and starts to contend for the second using period of the UWB channel. This can reduce duration of listening to the UWB channel, and improve UWB channel access efficiency.

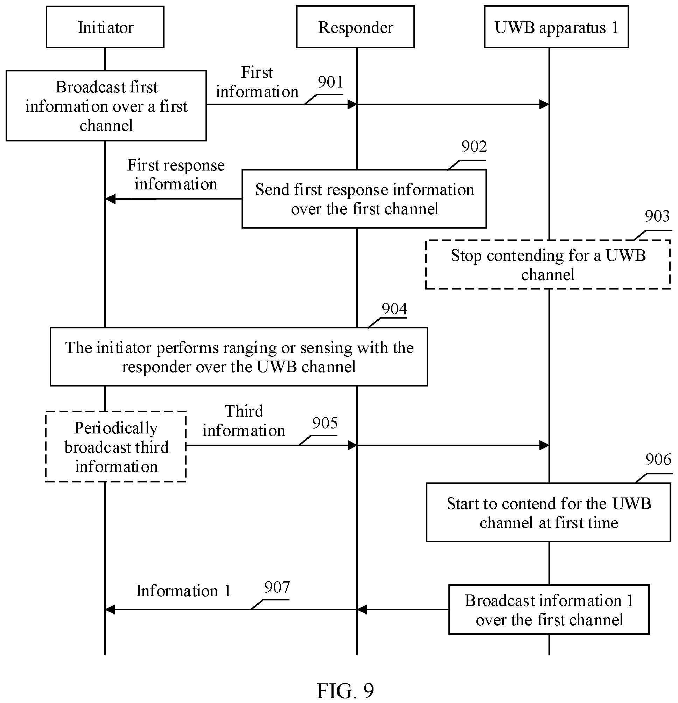

FIG. 9 is an interaction flowchart of another UWB channel access method according to an embodiment of this application. The method interaction procedure in FIG. 9 is a possible implementation of the method described in FIG. 6. In this implementation, the initiator broadcasts the first information over a first channel, that is, assists access to the UWB channel over a narrowband channel, so that interference to the UWB channel can be avoided. As shown in FIG. 9, the method includes the following steps.

901: The initiator broadcasts the first information over the first channel.

The first information indicates the first using period in which the initiator obtains the UWB channel by contention, and indicates the first time, where the first time is time of starting to contend for the second using period of the UWB channel, and the second using period is later than the first using period.

The initiator is a UWB apparatus. Corresponding to that the initiator broadcasts the first information over the first channel, one or more UWB apparatuses receive, over the narrowband channel, the broadcast first information. The one or more UWB apparatuses may include one or more responders corresponding to the initiator.

A frequency range of the first channel is 5725 MHz to 5850 MHz, and the narrowband channel is associated with (or corresponds to) the UWB channel. One or more UWB channels may correspond to one narrowband channel, that is, there is a correspondence between the one or more UWB channels and the one narrowband channel. In this application, the narrowband channel corresponding to the one or more UWB channels may be referred to as a narrowband mirroring channel (which may be referred to as a mirroring channel for short) of the one or more UWB channels. In other words, the one or more UWB channels correspond to the one narrowband mirroring channel. That the initiator broadcasts the first information over the first channel may be: broadcasting the first information over a narrowband mirroring channel corresponding to the UWB channel. The UWB apparatus that receives the first information can learn, by receiving the first information sent over the narrowband channel, the UWB channel (corresponding to the narrowband channel) obtained by the initiator by contention. That a UWB apparatus that obtains a UWB channel by contention broadcasts information (for example, first information) over the first channel may be understood as that a UWB apparatus that operates on these UWB channels (corresponding to the narrowband channel) contends for the using period of the UWB channel on the narrowband channel. Optionally, a frequency range of the first channel is 5725 MHz to 5850 MHz. Optionally, the frequency range of the first channel is 5812 MHz to 5818 MHz. Optionally, the frequency range of the first channel is 5772 MHz to 5778 MHz. It can be seen from FIG. 3 that there is no Wi-Fi channel in 5730 MHz to 5735 MHz. Therefore, the narrowband channel may be selected in a range of 5730 MHz to 5735 MHz, so that interference with a Wi-Fi signal can be effectively avoided. The narrowband channel (which may be referred to as the narrowband mirroring channel) is mainly used to transmit some control signaling. Therefore, a bandwidth does not need to be excessively large, and may be 1 MHz or 2 MHz. Although the UWB has 16 channels, UWB chips of chip vendors mainly support 5 or 9 channels. Based on a feature of a UWB channel supported by the UWB chip, this application provides an example of a narrowband channel division manner. Three narrowband channels are divided from 5730 MHz to 5732 MHz. 5730 MHz to 5732 MHz are narrowband channels of a UWB 5 channel, 5732 MHz to 5734 MHz are narrowband channels of a UWB 9 channel, and 5734 MHz to 5735 MHz are narrowband channels of other UWB channels. This application provides an example of another narrowband channel (namely, the first channel) division manner. Three narrowband channels are divided from 5730 MHz to 5732 MHz. 5730 MHz to 5732 MHz are narrowband channels of a UWB 9 channel, 5732 MHz to 5734 MHz are narrowband channels of a UWB 5 channel, and 5734 MHz to 5735 MHz are narrowband channels of other UWB channels. It should be understood that this application provides only examples of two narrowband channel division manners, which are not listed one by one herein. Other similar division manners also fall within the protection scope of this application. Broadcasting the first information over the first channel can avoid causing interference to the UWB channel.

In a possible implementation, the first information includes the end time of the first using period or the first time, the first time is before the end time of the first using period, and a time interval between the first time and the end time of the first using period is first duration. The first duration may be 5 ms, 10 ms, or the like. This is not limited in this application. For example, the first information includes the end time of the first using period, and the first duration is preset duration (that is, each UWB apparatus that receives the first information knows the first duration). Each UWB apparatus that receives the first information may obtain the first time based on the end time of the first using period and the first duration. For example, the first information includes the end time of the first using period and the first duration. For example, the first information includes the first time, and the first duration is preset duration (that is, each UWB apparatus that receives the first information knows the first duration). Each UWB apparatus that receives the first information may obtain the end time of the first using period based on the first time and the first duration. It may be understood that the end time of the first using period is time after the first duration of the first time. In this implementation, the first information includes the end time of the first using period or the first time, so that the UWB apparatus that receives the first information quickly and accurately obtains the end time of the first using period and the first time.

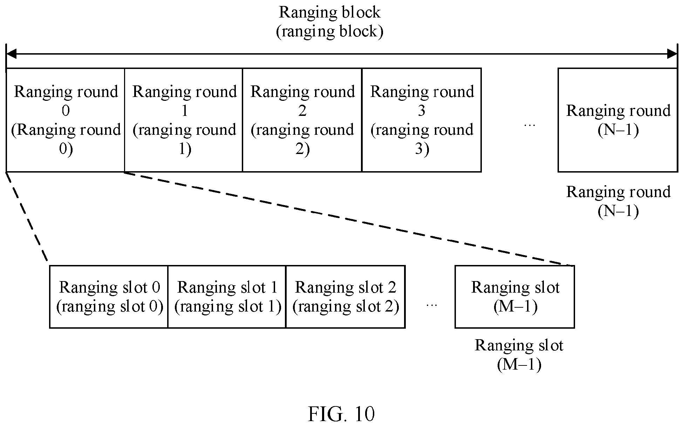

A purpose of the first information may be understood as reserving (or reserving or reserving) the first using period of a UWB channel, and is used for ranging or sensing. It may be understood that when the technical solutions provided in this application are applied to a ranging scenario, the first information includes at least one of the following: an initiator ID, a responder ID, ranging start time of the initiator, ranging start time of the responder (which may also be indicated by the responder), ranging end time (that is, the end time of the first using period), a UWB channel (not required if the narrowband channel is in a one-to-one correspondence with the UWB channel), start time of a next contention period (that is, the first time)/duration of a next contention period (not required if a length of a contention period is a preset value), a quantity of ranging rounds (ranging round) included in current ranging, a quantity of ranging slots (ranging slot) included in each ranging round, duration of the ranging slot, a quantity of UWB segments included in each ranging round, duration of each UWB segment, and the like. The duration of the next contention period is the foregoing first duration. It may be understood that when the technical solutions provided in this application are applied to a sensing scenario, the first information includes at least one of the following: an initiator ID, a responder ID, sensing start time of the initiator, sensing start time of the responder, sensing end time (that is, the end time of the first using period), a UWB channel (not required if the narrowband channel is in a one-to-one correspondence with the UWB channel), start time of a next contention period (that is, the first time)/duration of a next contention period (not required if a length of a contention period is a preset value), a quantity of ranging rounds included in current sensing, a quantity of ranging slots included in each ranging round, duration of the ranging slot, a quantity of UWB segments included in each ranging round, duration of each UWB segment, and the like. FIG. 10 show an example of a ranging round and a ranging slot according to this application. As shown in FIG. 10, a ranging block (ranging block) includes N ranging rounds, and each ranging round includes M ranging slots, where M and N are integers greater than 1.

In a possible implementation, step 901 is replaced with that the initiator broadcasts the first information over the first UWB channel, where the first information indicates a first using period in which the initiator obtains a second UWB channel by contention, and indicates first time, and the first time is time of starting to contend for the second using period of the second UWB channel. In other words, the narrowband channel may be replaced with the first UWB channel, and the UWB channel may be replaced with the second UWB channel. There is no interference or little interference between the first UWB channel and the second UWB channel. For example, a frequency range of the first UWB channel is different from a frequency range of the second UWB channel. In this implementation, the UWB channel may be classified into two types: one is used to broadcast information (for example, the first information), and the other is used for ranging or sensing. In this implementation, broadcasting the first information over the first UWB channel can avoid causing interference to the second UWB channel. The initiator may further broadcast the first information over another channel. This is not limited in this application.

902: The responder sends first response information to the initiator over the first channel.

Step 902 may be: In response to the first information, the responder sends the first response information to the initiator over the narrowband mirroring channel (that is, the first channel) corresponding to the UWB channel. The first response information is used to confirm a ranging parameter. The first response information may include ranging start time of the responder. Alternatively, the first response information is used to confirm a sensing parameter. The first response information may include sensing start time of the responder.

903: The UWB apparatus 1 stops contending for the UWB channel.

A sequence of step 902 and step 903 is not limited. Step 903 is optional.

904: The initiator performs ranging or sensing with the responder over the UWB channel.

Optionally, after ranging is completed, the responder may report receive and transmit time of the responder to the initiator. A reporting process may occur on a mirroring channel corresponding to the UWB channel, or may be performed over another narrowband channel. This is not limited herein.

905: The initiator periodically broadcasts third information.

Correspondingly, one or more UWB apparatuses may receive the broadcast third information. The third information includes the end time of the first using period. It may be understood that step 905 is optional but not mandatory. The UWB apparatus that receives the third information may stop contending for the first using period based on the third information. The UWB apparatus that receives the third information may determine, based on the third information, the first time of starting to contend for the second using period. The third information may include the first time. A possible implementation of step 905 is as follows: after broadcasting the first information and before the end time of the first using period, periodically broadcasting the third information over the narrowband mirroring channel corresponding to the UWB channel. That is, the initiator periodically broadcasts the third information in a sensing or ranging process. When the technical solutions provided in this application are applied to the ranging scenario, the third information may include at least one of the following: the ranging end time (the information needs to exist), a UWB operating channel, and the initiator ID. When the technical solutions provided in this application are applied to the sensing scenario, the third information includes the sensing end time, and may further include the UWB operating channel and the initiator ID. A difference between the first information and the third information lies in that: The first information not only arranges a ranging (or sensing) procedure of a link of the first information, but also notifies another UWB ranging (or sensing) link of the arrangement; and the third information is mainly used to notify another UWB ranging (or sensing) link of end time of current ranging (or sensing) procedure (that is, the end time of the first using period) and start time of next contention backoff (that is, the first time). The third information is periodically broadcast. This can effectively reduce listening time when the another UWB apparatus accesses the UWB channel, and reduce power consumption.

906: The UWB apparatus 1 starts to contend for the UWB channel at the first time.

That the UWB apparatus 1 starts to contend for the UWB channel at the first time may be starting to contend for the second using period of the UWB channel at the first time.

907: The UWB apparatus 1 broadcasts information 1 over the first channel.

The information 1 indicates that the UWB apparatus 1 obtains the second using period of the UWB channel by contention, and indicates time 1, where the time 1 is time at which the UWB apparatus 1 starts to contend for a third using period of the UWB channel, and the third using period is later than the second using period. It may be understood that the information 1 is similar to the foregoing first information. It should be understood that the UWB apparatus that obtains the second using period by contention may perform an operation similar to that performed by the initiator in FIG. 9, to implement ranging or sensing.

Optionally, after receiving the third information, the UWB apparatus 1 that does not receive the first information stops contending for the first using period, and starts to contend for the UWB channel at the first time. It can be seen that, the third information is periodically broadcast, so that listening time when the another UWB apparatus accesses the UWB channel can be effectively reduced, and time when the another UWB apparatus starts contention next time can be indicated.

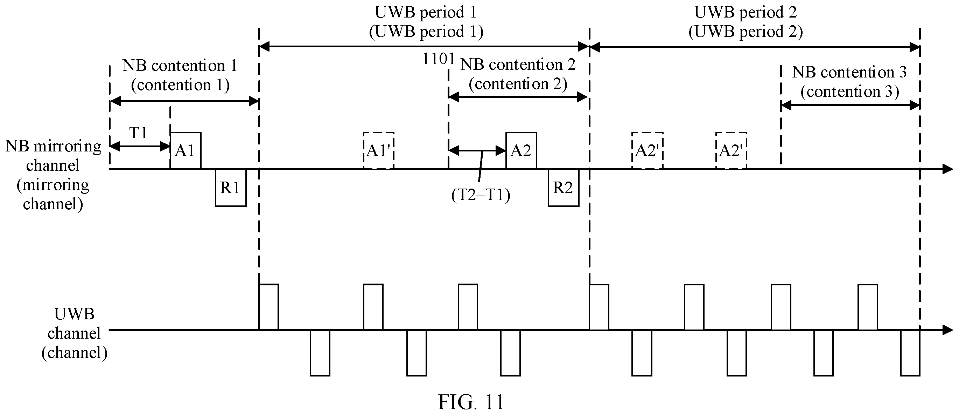

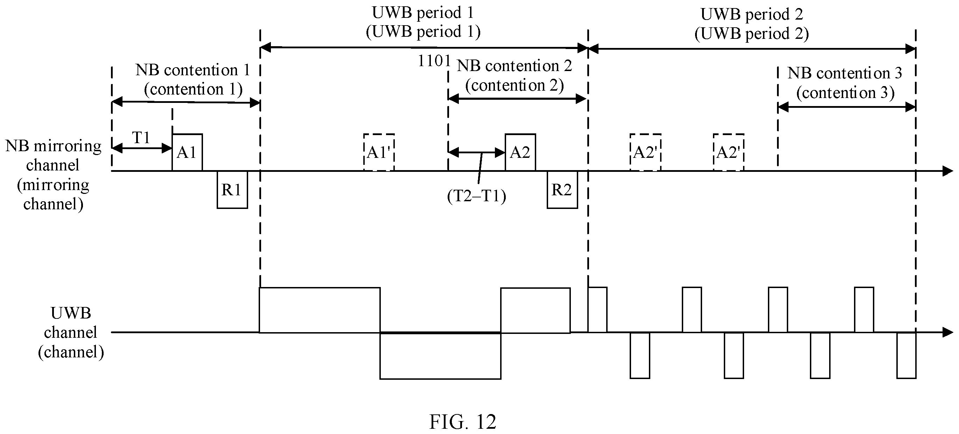

The following further describes a method interaction procedure in FIG. 9 with reference to accompanying drawings. FIG. 11 is a diagram of a UWB channel access process according to an embodiment of this application. FIG. 11 shows a UWB channel access process by using an example in which two UWB apparatuses contend for a UWB channel. In FIG. 11, A1 and A1' represent information sent by an initiator (subsequently replaced by C1) over a narrowband mirroring channel, R1 represents information received by C1 over the narrowband mirroring channel, A2 and A2' represent information sent by the UWB apparatus 1 (subsequently replaced by C2) over the narrowband mirroring channel, R2 represents information received by C2 over the narrowband mirroring channel, 1101 represents first time, UWB period 1 (UWB period 1) represents a first using period, UWB period 2 (UWB period 2) represents a second using period, NB contention 1 (contention 1) represents a period of contending for a first using period, NB contention 2 (contention 2) represents a period of contending for a second using period, NB contention 3 (contention 3) represents a period of contending for a third using period (a next using period of the second using period), A1 represents first information, R1 represents first response information, A1' represents third information, A2 represents information (similar to the first information) broadcast over the first channel by the UWB apparatus 1 that obtains the second using period by contention, R2 represents response information (similar to R1) of the responder of the UWB apparatus 1 to A2, A2' represents information periodically broadcast by the UWB apparatus 1 (similar to A1'), an NB mirroring channel (NB mirroring channel) represents a narrowband mirroring channel corresponding to the UWB channel, and a rectangle on the UWB channel (UWB channel) indicates a status in which the UWB channel is used. Duration of the first using period and duration of the second using period may be different, and durations of NB contention 1, NB contention 2, and NB contention 3 are equal or unequal. Optionally, time periods in which the UWB apparatus contends for different using periods are equal, that is, duration of the contention time period is fixed. It should be noted that the case in which the UWB channel is used shown in FIG. 11 is merely an example. An initiator that contends for any using period may use an entire using period to perform ranging or sensing, or may use a part of the using period to perform ranging or sensing, that is, do not perform ranging or sensing at a part of the using period. In other words, how the initiator uses the using period of the UWB channel obtained by contention by the initiator is not limited in this application. Refer to FIG. 11. Time occupied by a rectangle in the UWB channel (that is, a width of the rectangle indicates occupied duration) indicates time in which the UWB channel is used, and time not occupied by the rectangle indicates time in which the UWB channel is not used. For example, each rectangle may correspond to one UWB segment. FIG. 12 is a diagram of another UWB channel access process according to an embodiment of this application. A difference between FIG. 12 and FIG. 11 only lies in that a UWB channel is used in different cases, and meanings of identifiers and/or parameters in FIG. 12 are the same as those in FIG. 11. Refer to FIG. 12. A first part of the first using period is occupied by a rectangle, and time occupied by the rectangle (that is, a width of the rectangle indicates occupied duration) indicates time when the UWB channel is used. The second using period corresponds to a plurality of rectangles. Time occupied by the rectangle indicates time when the UWB channel is used. Time not occupied by the rectangle indicates time when the UWB channel is not used. Time intervals between adjacent rectangles are the same or different.

As shown in FIG. 11 and FIG. 12, an example of an interaction procedure of the method in FIG. 9 is as follows: C1 and C2 contend for the first using period of the UWB channel. C1 obtains the first using period by contention after duration of T1. After obtaining the first using period by contention, C1 broadcasts A1 (that is, the first information) over the first channel to reserve the first using period. C2 stops contending for the first using period after receiving A1. C1 receives R1 (that is, the first response information) sent by the responder for A1, and performs ranging or sensing with the responder of C1 by using UWB channel in the first using period. C1 periodically sends A1' (that is, the third information) in the ranging or sensing process by using the UWB channel. C2 starts to contend for the second using period at the first time, and obtains the second using period by contention after duration (T2-T1). After obtaining the second using period by contention, C2 broadcasts A2 over the first channel to reserve the second using period. Another UWB apparatus (for example, C1) stops contending for the second using period after receiving A2. C2 receives R2 sent by a responder of C2 for A2, and performs ranging or sensing with the responder of C2 by using the UWB channel in the second using period. C2 periodically sends A2' in the ranging or sensing process by using the UWB channel. For example, C1 and C2 contend for the first using period by using a contention backoff mechanism. C1 that first backs off to 0 broadcasts A1 to reserve the first using period of the UWB channel. Another UWB apparatus (C1) stops backoff after receiving A1, and continue to back off until a next contention time period. In FIG. 11, a random backoff window of C1 is T1, a random backoff window of C2 is T2, and T1<T2. After time of T1, C1 backs off to 0, and C1 broadcasts A1 to reserve the first using period of the UWB channel. After receiving A1 (packet), C2 stops contending for the first using period, and a backoff window of C2 at this time is (T2-T1). C2 successively backs off from (T2-T1) at the first time, and backs off to 0 after (T2-T1). After C2 backs off to 0, A2 is broadcast over the first channel. In this application, the UWB apparatus may contend for the UWB channel in any manner, and duration in which the UWB apparatus contends for the UWB channel is not limited. For example, C2 generates a random backoff window T3 starting from the first time, and backs off from T3, instead of continuously backing off from (T2-T1).

In embodiments of this application, the initiator broadcasts the first information over the first channel, that is, assists access to the UWB channel over a narrowband channel, so that interference to the UWB channel can be avoided.

It should be emphasized that, in the method interaction procedures in FIG. 6 and FIG. 9, because the first information is broadcast, carrying ranging arrangement or sensing arrangement of the first information in the first information may cause a security or privacy problem. For example, some malicious attackers learn, by using the first information, specific time at which the ranging signal is sent by using the UWB channel. In this case, the malicious attackers may cause a large deviation to a ranging result by sending an interference signal. This causes a serious problem in an application scenario such as a vehicle key. Ranging arrangement may include ranging start time, an ID of the responder, ranging start time of the responder, and the like. Sensing arrangement may include sensing start time, the ID of the responder, the UWB channel, and the like.

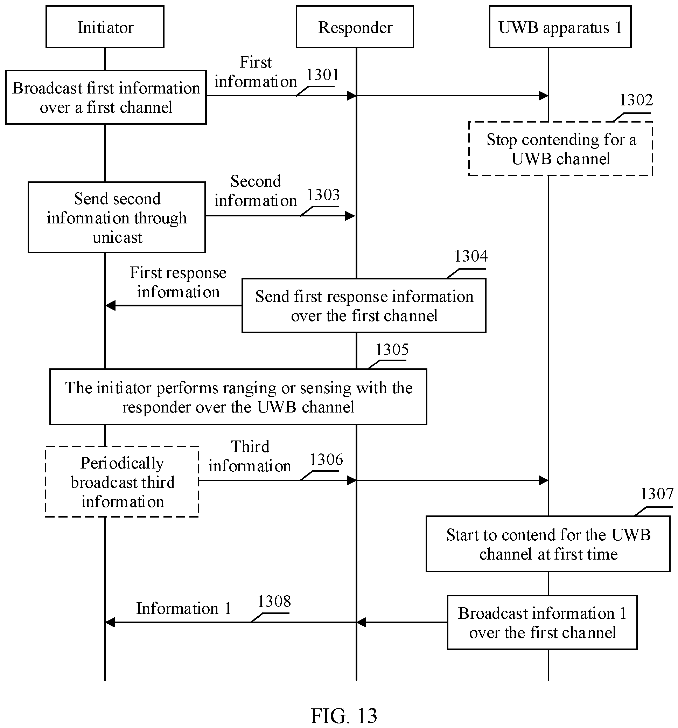

FIG. 13 is an interaction flowchart of still another UWB channel access method according to an embodiment of this application. The method interaction procedure in FIG. 13 is a possible implementation of the method described in FIG. 6. In this implementation, the initiator sends the second information to the responder through unicast, where the second information is used by the responder to perform ranging or sensing with the initiator by using the UWB channel. This can avoid a security or privacy problem that may be caused when ranging arrangement or sensing arrangement is carried in the first information. As shown in FIG. 13, the method includes the following steps.

1301: The initiator broadcasts the first information over the first channel.

For step 1301, refer to step 901.

1302: The UWB apparatus 1 stops contending for the UWB channel.

For step 1302, refer to step 903. After receiving the first information, the UWB apparatus 1 may stop contending for the UWB channel. Step 1302 is optional but not mandatory. For example, the UWB apparatus 1 continues to contend for the UWB channel, and performs ranging or sensing based on the first information in a period during which the UWB channel is not used.

1303: The initiator sends the second information to the responder through unicast.

The second information is used by the responder to perform ranging or sensing with the initiator by using the UWB channel. The second information may be a ranging control message (ranging control message, RCM) sent over the narrowband channel. The second information may include ranging arrangement or sensing arrangement. For example, the initiator sends the second information to the responder in a unicast manner over the narrowband mirroring channel corresponding to the UWB channel.

1304: The responder sends first response information to the initiator over the first channel.

For step 1304, refer to step 902. A possible implementation of step 1304 is as follows: In response to the second information, the responder sends the first response information to the initiator over the first channel. The first response information is used to confirm a ranging parameter. The first response information may include ranging start time of the responder. Alternatively, the first response information is used to confirm a sensing parameter. The first response information may include sensing start time of the responder.

1305: The initiator performs ranging or sensing with the responder over the UWB channel.

1306: The initiator periodically broadcasts third information.

For step 1306, refer to step 905. Step 1306 is optional.

1307: The UWB apparatus 1 starts to contend for the UWB channel at the first time.

For step 1307, refer to step 906. That the UWB apparatus 1 starts to contend for the UWB channel at the first time may be understood as: starting to contend for the second using period of the UWB channel at the first time.

1308: The UWB apparatus 1 broadcasts information 1 over the first channel.

For step 1308, refer to step 907.

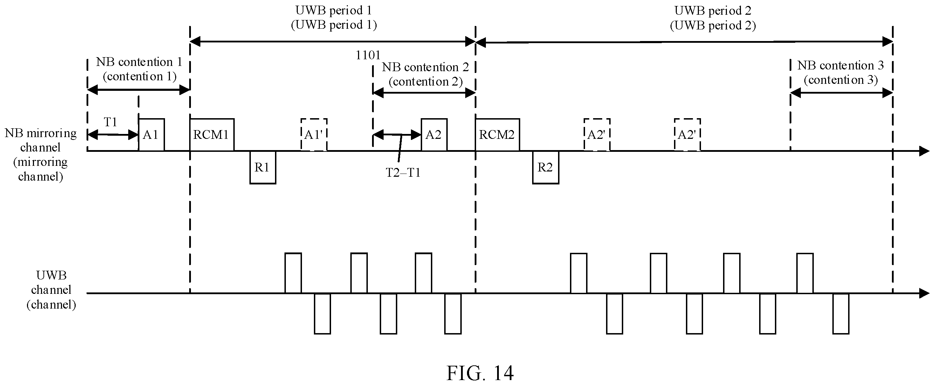

FIG. 14 is a diagram of another UWB channel access process according to an embodiment of this application. A difference between FIG. 14 and FIG. 11 may be understood as that A1 in FIG. 11 is split into A1 and RCM1 (that is, second information) in FIG. 14, and A2 in FIG. 11 is split into A2 and RCM2 in FIG. 14. In FIG. 14, A1 represents the first information, RCM1 represents the second information, A2 represents information broadcast by C2 (similar to A1), and RCM2 represents information (similar to second information) sent by C2 through unicast. Other identifiers or parameters are the same as those in FIG. 11. Optionally, A1 in FIG. 11 includes the end time of the first using period, and ranging arrangement or sensing arrangement. A1 in FIG. 14 includes only the end time of the first using period. RCM1 in FIG. 14 may include ranging arrangement or sensing arrangement, and may further include the end time of the first using period.

As shown in FIG. 14, an example of an interaction procedure of the method in FIG. 14 is as follows: C1 and C2 contend for the first using period of the UWB channel. C1 obtains the first using period by contention after duration of T1. After obtaining the first using period by contention, C1 broadcasts A1 (that is, the first information) over the first channel to reserve the first using period. C2 stops contending for the first using period (or stops contending for the UWB channel) after receiving A1. C1 sends RCM1 (that is, the second information) to the responder through unicast. C1 receives R1 (that is, the first response information) sent by the responder for RCM1, and performs ranging or sensing with the responder by using the UWB channel in the first using period. In a ranging or sensing process by using the UWB channel, C1 periodically sends A1' (that is, the third information). C2 starts to contend for the UWB channel at the first time, and obtains the second using period of the UWB channel by contention after duration of (T2-T1). After obtaining the second using period by contention, C2 broadcasts A2 over the first channel to reserve the second using period. After receiving A2, another UWB apparatus (for example, C1) stops contending for the second using period. C2 sends RCM2 to the responder through unicast. C2 receives R2 sent by the responder of C2 for RCM2, and performs ranging or sensing with the responder of C2 by using the UWB channel in the second using period. C2 periodically sends an A2' packet in the ranging or sensing process by using the UWB channel.

In embodiments of this application, the initiator sends the second information to the responder through unicast, where the second information is used by the responder to perform ranging or sensing with the initiator by using the UWB channel. This can avoid a security or privacy problem that may be caused when ranging arrangement or sensing arrangement is carried in the first information.

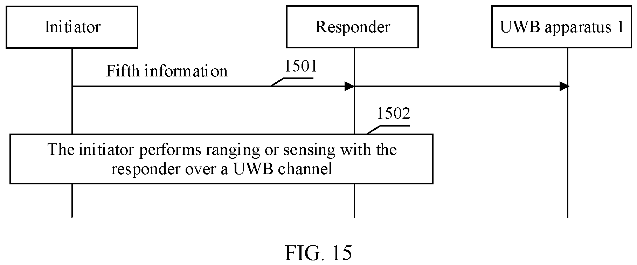

FIG. 15 is an interaction flowchart of yet another UWB channel access method according to an embodiment of this application. In comparison with the method interaction process in FIG. 6, in the method interaction process in FIG. 15, after another UWB apparatus obtains a using period by contention, the UWB apparatus determines whether the using period to be reserved meets an allowed maximum reservation time requirement. This can prevent the UWB channel from being reserved too early. As shown in FIG. 15, the method includes the following steps.

1501: The initiator broadcasts fifth information.

The fifth information indicates that the initiator obtains a third using period of a UWB channel by contention. A time interval between the third time and the second time is less than a time threshold. The second time is before the third time. The second time is time at which the initiator broadcasts the fifth information, and is also time at which the initiator obtains the third using period by contention. The third time is start time of the third using period. Alternatively, the third time is end time of the third using period. When the third time is the start time of the third using period, the time threshold is 8 ms, 9 ms, 10 ms, 12 ms, 15 ms, or the like. This is not limited in this application. When the third time is the end time of the third using period, the time threshold is 40 ms, 45 ms, 50 ms, 55 ms, or the like. This is not limited in this application.

Optionally, the fifth information includes end time of the third using period. That the initiator broadcasts the fifth information may be broadcasting the fifth information over a narrowband mirroring channel corresponding to the UWB channel. Correspondingly, the UWB apparatus 1 and the responder receive the broadcast fifth information, and may learn, based on the fifth information, that the initiator obtains the third using period of the UWB channel by contention.

A possible implementation of step 1501 is as follows: broadcasting fifth information when a time interval between the second time at which the initiator obtains the UWB channel by contention and the third time is less than the time threshold.

Before performing step 1501, the initiator may perform the following operation: The initiator contends for the UWB channel. When a time interval between fourth time at which the initiator obtains the UWB channel by contention and fifth time is greater than or equal to the time threshold, the initiator contends for the UWB channel again or contends for the UWB channel again after sending data, where the fifth time is start time or end time of a fourth using period, and the fourth using period is a period estimated by the initiator for using the UWB channel when the initiator obtains the UWB channel by contention at the fourth time. For example, the initiator contends for the UWB channel by using a random backoff mechanism, and the initiator backs off to 0 at the fourth time. When the time interval between the fourth time and the fifth time is greater than or equal to the foregoing time threshold, the initiator starts backoff again or backs off again after sending data. The initiator backs off to 0 at the second time. When the time interval between the second time and the third time is less than the time threshold, the initiator broadcasts the fifth information over the first channel.

Before performing step 1501, the initiator may perform the following operations: The initiator contends for the UWB channel; and the initiator obtains the third using period of the UWB channel in the second time by contention. For example, the initiator contends for the UWB channel by using the random backoff mechanism. The initiator backs off to 0 at the second time. When the time interval between the second time and the third time is less than the time threshold, the initiator broadcasts the fifth information over the first channel.

In the process of the method in FIG. 15, before broadcasting information (fifth information) to reserve a using period obtained by contention, a UWB apparatus (for example, the initiator) that obtains the UWB channel by contention needs to determine whether the using period to be reserved meets an allowed maximum reservation time requirement. If the requirement is met, information (for example, the fifth information) is broadcast on a mirroring channel corresponding to the UWB channel to reserve the using period of the UWB channel. If the requirement is not met, the UWB apparatus contends for the UWB channel again. The determining condition herein may be whether the start time of the using period to be reserved meets the requirement, or may be whether the start time of the reserved using period meets the requirement, or may be whether both the start time and the end time of the reserved using period meet the requirement. Using the initiator in FIG. 15 as an example, time when the initiator obtains the third using period of the UWB channel by contention is the second time, and if a time interval between the second time and the start time of the third using period is less than the time threshold, the start time of the third using period reserved by the initiator meets a requirement. If the time interval between the second time and the end time of the third using period is less than the time threshold, the end time of the third using period reserved by the initiator meets the requirement. If the time interval between the second time and the start time of the third using period is less than a time threshold 2 and the time interval between the second time and the end time of the third using period is less than a time threshold 3, both the start time and the end time of the third using period reserved by the initiator meet the requirement. The time threshold 2 and the time threshold 3 are different.

1502: The initiator performs ranging or sensing with the responder over the UWB channel.

For step 1502, refer to step 602. Optionally, before performing step 1502, the initiator receives second response information from the responder. The second response information is response information sent by the responder to the initiator for the fifth information. The second response information is used to confirm a ranging parameter. The second response information may include ranging start time of the responder. Alternatively, the second response information is used to confirm a sensing parameter. The second response information may include sensing start time of the responder.

In a possible implementation, the initiator further performs the following operations: The initiator receives sixth information, where the sixth information indicates a status in which the UWB channel is used; and after obtaining the UWB channel by contention (for example, backing off to 0), the initiator performs ranging or sensing based on the sixth information in a period during which the UWB channel is not used. In this implementation, ranging or sensing is performed in the period during which the UWB channel is not used, thereby improving utilization of a channel.

In embodiments of this application, the initiator broadcasts the fifth information, and the time interval between the third time and the second time is less than the time threshold. This can improve utilization of a channel, and prevent the UWB channel from being reserved too early.

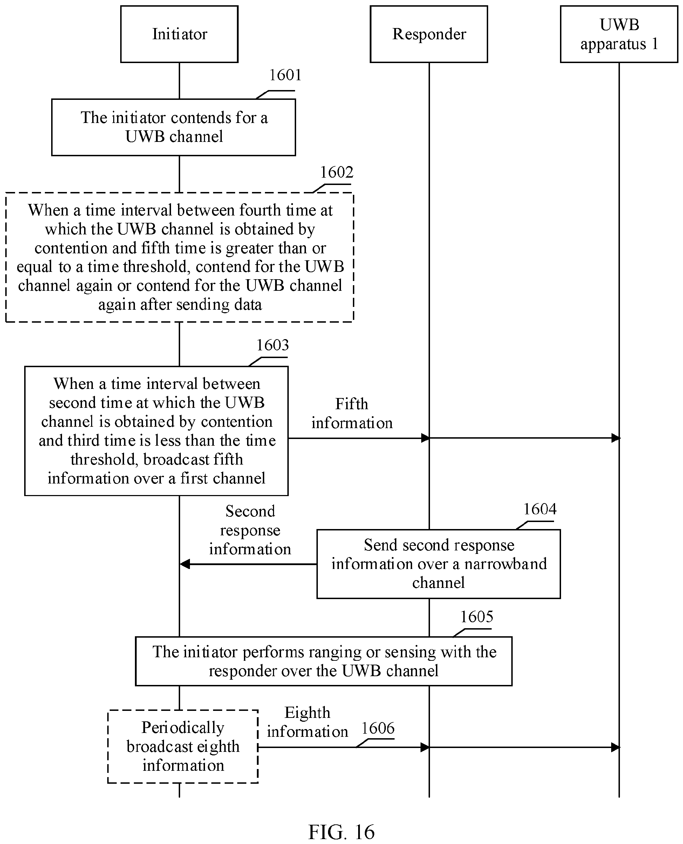

FIG. 16 is an interaction flowchart of still yet another UWB channel access method according to an embodiment of this application. The method interaction procedure in FIG. 16 is a possible implementation of the method described in FIG. 15. In this implementation, when a to-be-reserved using period does not meet an allowed maximum reservation time requirement, the initiator contends for the UWB channel again or contends for the UWB channel again after sending data, so that the UWB channel is not reserved too early. As shown in FIG. 16, the method includes the following steps.

1601: An initiator contends for the UWB channel.

In a possible implementation, the initiator further performs the following operations: receiving information 3 broadcast by a UWB apparatus 1, where the information 3 indicates that the UWB apparatus 1 obtains a second using period of the UWB channel by contention, and indicates end time of the second using period. The initiator may determine, based on the information 3, the start time of a next using period of the second using period, that is, start time of a third using period. In this implementation, after receiving the information 3 broadcast by the UWB apparatus 1, the initiator continues to contend for the third using period of the UWB channel.

1602: When a time interval between the fourth time at which the initiator obtains the UWB channel by contention and the fifth time is greater than or equal to the time threshold, the initiator contends for the UWB channel again or contends for the UWB channel again after sending data.

Step 1602 is optional but not mandatory. The fourth time is before the fifth time. It should be understood that, if the time interval between the time at which the initiator obtains the UWB channel by contention and the fifth time is less than the time threshold, the initiator directly broadcasts the fifth information over the first channel, and does not need to contend for the UWB channel again.

1603: When the time interval between the second time at which the initiator obtains the UWB channel by contention and the third time is less than the time threshold, the initiator broadcasts the fifth information over the first channel.

Broadcasting the fifth information over the first channel may be broadcasting the fifth information over the first channel corresponding to the UWB channel. After starting to contend for the third using period of the UWB channel, the initiator may broadcast the fifth information when obtaining the third using period by contention for a first time, where a time interval between time at which the third using period is obtained by contention for the first time and the third time is less than a time threshold. Alternatively, the fifth information may be broadcast when the third using period is obtained by contention for a second time, where a time interval between time at which the third using period is obtained by contention for the second time and the third time is less than the time threshold. Alternatively, the fifth information may be broadcast when the third using period is obtained by contention for a $K^{th}$ time, where a time interval between a time at which the third using period is obtained by contention for the $K^{th}$ time and the third time is less than the time threshold, and K is an integer greater than 2. For example, the initiator contends for the third using period of the UWB channel by using a contention backoff mechanism. The initiator may broadcast the fifth information when backing off to 0 for the first time, where a time interval between time when backing off to 0 for the first time and the third time is less than a time threshold. Alternatively, the fifth information may be broadcast when backoff to 0 is performed for the second time, where a time interval between time at which backoff to 0 is performed for the second time and the third time is less than the time threshold. Alternatively, the fifth information may be broadcast when backoff to 0 is performed for the $K^{th}$ time, where a time interval between time at which backoff to 0 is performed for the $K^{th}$ time and the third time is less than the time threshold.

When the technical solutions provided in this application are applied to a ranging scenario, the fifth information may include at least one of the following: an initiator ID, a responder ID, ranging start time of the initiator, ranging start time of the responder (which may also be indicated by the responder), ranging end time (that is, end time of the third using period), a UWB channel (not required if the narrowband channel is in a one-to-one correspondence with the UWB channel), a quantity of ranging rounds included in current ranging, a quantity of ranging slots (ranging slot) included in each ranging round, duration of the ranging slot, a quantity of UWB segments included in each ranging round, duration of each UWB segment, and the like. It may be understood that when the technical solutions provided in this application are applied to a sensing scenario, the first information may include at least one of the following: an initiator ID, a responder ID, sensing start time of the initiator, sensing start time of the responder, sensing end time (that is, the end time of the third using period), a UWB channel (not required if the narrowband channel is in a one-to-one correspondence with the UWB channel), a quantity of ranging rounds included in current sensing, a quantity of ranging slots included in each ranging round, duration of the ranging slot, a quantity of UWB segments included in each ranging round, duration of each UWB segment, and the like.

1604: The responder sends second response information to the initiator over the narrowband channel.

Step 1604 may be: In response to the fifth information, the responder sends the second response information to the initiator over the narrowband channel. The second response information is used to confirm a ranging parameter or a sensing parameter.

1605: The initiator performs ranging or sensing with the responder over the UWB channel.

1606: The initiator periodically broadcasts eighth information.

The eighth information includes end time of the third using period. For step 1606, refer to step 906. After receiving the eighth information, the UWB apparatus may learn of the end time of the third using period, and further decide whether to contend for a next using period of the third using period. Step 1606 is optional.

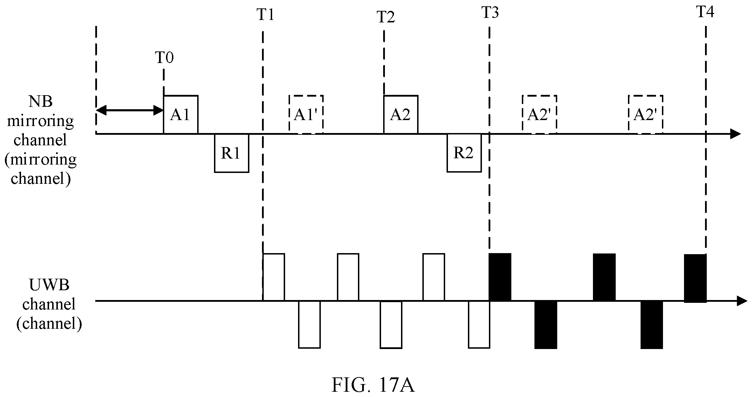

FIG. 17A to FIG. 17C are diagrams of a UWB channel access process according to an embodiment of this application. In FIG. 17A to FIG. 17C, an example in which two UWB apparatuses contend for a UWB channel is used to show an access process of the UWB channel. FIG. 17A to FIG. 17C all show a method procedure executed by a UWB apparatus 1 that obtains a second using period by contention, and a method procedure executed by an initiator that obtains a third using period by contention (corresponding to the method procedure in FIG. 16).

In FIG. 17A, A1 and A1' represent information sent by the UWB apparatus 1 (subsequently replaced by C1) over a narrowband mirroring channel. R1 represents information received by C1 over the narrowband mirroring channel. A2 and A2' represent information sent by the initiator (subsequently replaced by C2) over the narrowband mirroring channel. R2 represents information received by C2 over the narrowband mirroring channel. T0 represents time at which the UWB apparatus 1 obtains the second using period by contention. T1 represents start time of the second using period. T2 represents time at which the initiator contends for a third using period. T3 represents end time of the second using period (or start time of the third using period). T4 represents end time of the third using period. A1 represents information (similar to fifth information) broadcast by the UWB apparatus 1 over a narrowband mirroring channel (NB mirroring channel). R1 represents response information (similar to second response information) of a responder of the UWB apparatus 1 for A1. A1' represents information (similar to eighth information) periodically broadcast by the UWB apparatus 1. A2 represents fifth information. R2 represents second response information. A2' represents the eighth information. A rectangle on a UWB channel (UWB channel) represents a status in which the UWB channel is used. In FIG. 17A to FIG. 17C, a white rectangle shows a status in which C1 and the responder of C1 use the UWB channel, and a black rectangle shows a status in which C2 and the responder of C2 use the UWB channel. A time interval between T1 and T3 represents the second using period, and a time interval between T3 and T4 represents the third using period.

As shown in FIG. 17A, an example of an interaction procedure of the method in FIG. 16 is as follows: C1 and C2 contend for the second using period of the UWB channel. C1 obtains the second using period by contention at T0. After obtaining the second using period by contention, C1 broadcasts A1 over the first channel to reserve the second using period. C1 receives R1 sent by the responder for A1, and performs ranging or sensing with the responder by using the UWB channel in the second using period. In a ranging or sensing process by using the UWB channel, C1 periodically sends A1'. C2 obtains the third using period by contention at T2. In a case in which a time interval between T2 and T3 (or T4) is less than a time threshold, C2 broadcasts A2 packet over the first channel to reserve the third using period. C2 receives R2 sent by the responder of C2 for A2, and performs ranging or sensing with the responder of C2 by using the UWB channel in the second using period. C2 periodically sends A2' in the ranging or sensing process by using the UWB channel. In this example, T3-T2<T_allowed or T4-T2<T_allowed, that is, an allowed maximum reservation time requirement is met. T_allowed indicates the time threshold. For example, the initiator contends for the UWB channel by using a contention backoff mechanism, and when backing off to 0, determines whether a time interval between T2 and T3 (or T4) is less than a time threshold. If the time interval between T2 and T3 (or T4) is less than the time threshold, the fifth information is broadcast. If the time interval between T2 and T3 (or T4) is not less than the time threshold, backoff is performed again.

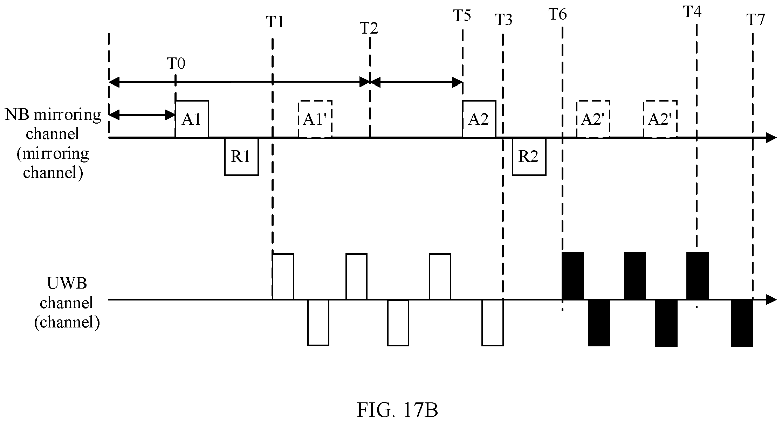

In FIG. 17B, A1 and A1' represent information sent by the UWB apparatus 1 (subsequently replaced by C1) over the narrowband mirroring channel. R1 represents information received by C1 over the narrowband mirroring channel. A2 and A2' represent information sent by the initiator (subsequently replaced by C2) over the narrowband mirroring channel. R2 represents information received by C2 over the narrowband mirroring channel. T0 represents time at which the UWB apparatus 1 obtains the second using period by contention. T1 represents the start time of the second using period. T2 represents the time at which the initiator obtains the third using period by contention for a first time. T3 represents the end time of the second using period. T5 represents time at which the initiator obtains the third using period by contention for a second time. T6 represents time at which the initiator starts to use the UWB channel (that is, the start time of the third using period). T7 represents the end time of the third using period. For meanings of A1, R1, A1', A2, R2, and A2', refer to FIG. 17A. The rectangle on the UWB channel (UWB channel) indicates a status in which the UWB channel is used. It should be noted that T4 in FIG. 17B represents end time of an estimated using period in which the UWB channel needs to be used when C2 obtains the UWB channel by contention at T2. T3 may be understood as start time of the estimated using period in which the UWB channel needs to be used when C2 obtains the UWB channel by contention at T2. T7 may be understood as end time of an estimated using period in which the UWB channel needs to be used when C2 obtains the UWB channel by contention at T5. T6 may be understood as end time of the estimated using period in which the UWB channel needs to be used when C2 obtains the UWB channel by contention at T5. In addition, the start time of the third using period may be later than the end time of the second using period.

As shown in FIG. 17B, an example of an interaction procedure of the method in FIG. 16 is as follows: C1 and C2 contend for the second using period of the UWB channel. C1 obtains the second using period by contention at T0. After obtaining the second using period by contention, C1 broadcasts A1 over the first channel to reserve the second using period. C1 receives R1 sent by the responder for A1, and performs ranging or sensing with the responder by using the UWB channel in the second using period. In a ranging or sensing process by using the UWB channel, C1 periodically sends A1'. C2 obtains a third using period by contention for the first time at T2. C2 contends for the UWB channel again when the time interval between T2 and T3 (or T4) is greater than or equal to the time threshold. C2 obtains the third using period by contention for the second time at T5. When the time interval between T5 and T6 (or T7) is less than the time threshold, C2 broadcasts A2 over the first channel to reserve the third using period. C2 receives R2 sent by the responder of C2 for A2, and performs ranging or sensing with the responder of C2 by using the UWB channel in the second using period. C2 periodically sends A2' in the ranging or sensing process by using the UWB channel. In this example, T3-T2<T_allowed (or T4-T2<T_allowed), that is, an allowed maximum reservation time requirement is met. Because T3-T2>T_allowed (or T4-T2>T_allowed), C2 needs to contend for the UWB channel again after obtaining the UWB channel by contention at T2. For example, the initiator contends for the UWB channel by using a contention backoff mechanism, and when backing off to 0, determines whether the time interval between T2 and T3 (or T4) is less than the time threshold. If the time interval between T2 and T3 (or T4) is less than the time threshold, the fifth information is broadcast. If the time interval between T2 and T3 (or T4) is not less than the time threshold, backoff is performed again. When backoff to 0 is performed again, it is determined again whether a time interval between time of backoff to 0 (that is, T5) and T6 (or T7) is less than the time threshold. By analogy, the time interval between the time of backoff to 0 and T6 (or T7) is less than the time threshold.

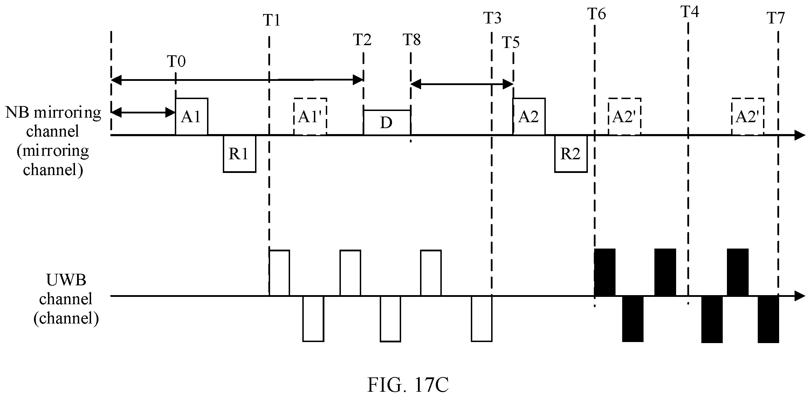

In FIG. 17C, D represents a time period in which C2 (that is, the initiator) sends data, and T8 represents a time period in which C2 contends for the UWB channel again. For meanings of T0, T1, T2, T3, T4, T5, T6, T7, A1, R1, A1', A2, R2, and A2', refer to FIG. 17B. In addition, the start time of the third using period may be later than the end time of the second using period.

As shown in FIG. 17C, an example of an interaction procedure of the method in FIG. 16 is as follows: C1 and C2 contend for a UWB channel. C1 obtains the second using period of the UWB channel by contention at T0. After obtaining the second using period by contention, C1 broadcasts A1 over the first channel to reserve the second using period. C1 receives R1 sent by the responder for A1, and performs ranging or sensing with the responder by using the UWB channel in the second using period. In a ranging or sensing process by using the UWB channel, C1 periodically sends A1'. C2 obtains the third using period by contention for the first time at T2. In a case in which a time interval between T2 and T3 (or T4) is greater than or equal to a time threshold, C2 contend for the UWB channel again after sending data. C2 obtains the third using period by contention for a second time at T5. C2 broadcasts A2 over the first channel in a case in which a time interval between T5 and T6 (or T7) is less than the time threshold, to reserve the third using period. C2 receives R2 sent by the responder of C2 for A2 packet, and performs ranging or sensing with the responder of C2 by using the UWB channel in the second using period. C2 periodically sends A2' in the ranging or sensing process by using the UWB channel. In FIG. 17C, a time interval between end time of a time end represented by D and T5 represents a re-backoff process. In this example, T3-T2<T_allowed (or T4-T2<T_allowed), that is, an allowed maximum reservation time requirement is met. Because T3-T2>T_allowed (or T4-T2>T_allowed), C2 needs to contend for the UWB channel again after obtaining the UWB channel by contention at T2. For example, the initiator contends for the UWB channel by using a contention backoff mechanism, and when backing off to 0, determines whether the time interval between T2 and T3 (or T4) is less than the time threshold. If the time interval between T2 and T3 (or T4) is less than the time threshold, the fifth information is broadcast. If the time interval between T2 and T3 (or T4) is not less than the time threshold, backoff is performed again after sending data. When backoff to 0 is performed again, it is determined again whether a time interval between time of backoff to 0 (T5) and T6 (or T7) is less than the time threshold, and so on.

In embodiments of this application, when the time interval between the second time and the third time at which the initiator obtains the UWB channel by contention is less than the time threshold, the initiator broadcasts the fifth information over the first channel. This can prevent the UWB channel from being reserved too early.

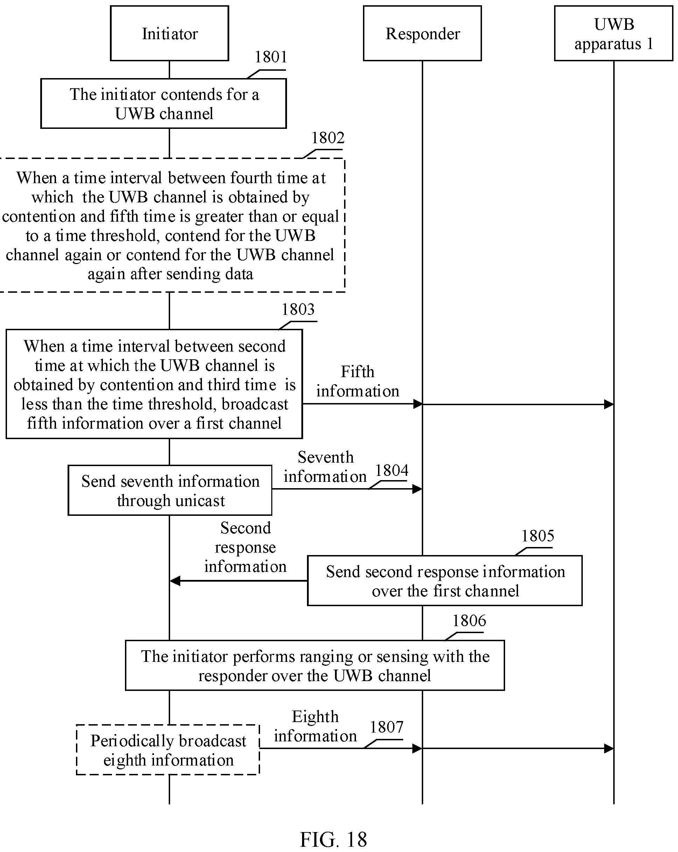

FIG. 18 is an interaction flowchart of further another UWB channel access method according to an embodiment of this application. The method interaction procedure in FIG. 18 is a possible implementation of the method described in FIG. 15. In this implementation, the initiator sends seventh information to the responder through unicast, where the seventh information is used by the responder to perform ranging or sensing with the initiator by using the UWB channel. This can avoid a security or privacy problem that may be caused when ranging arrangement or sensing arrangement is carried in the broadcast information. As shown in FIG. 18, the method includes the following steps.

1801: An initiator contends for the UWB channel.

For step 1801, refer to step 1601.

1802: When a time interval between fourth time at which the initiator obtains the UWB channel by contention and fifth time is greater than or equal to the time threshold, the initiator contends for the UWB channel again or contends for the UWB channel again after sending data.

The fifth time is start time or end time of a fourth using period, and the fourth using period is a period estimated by the initiator for using the UWB channel when the initiator obtains the UWB channel by contention at the fourth time.

For step 1802, refer to step 1602.

1803: If the time interval between the second time and the third time at which the initiator obtains the UWB channel by contention is less than the time threshold, the initiator broadcasts the fifth information over the first channel.

For step 1803, refer to step 1603.

1804: The initiator sends the seventh information to the responder through unicast.

The seventh information is used by the responder to perform ranging or sensing with the initiator by using the UWB channel. The seventh information may include ranging arrangement or sensing arrangement.

1805: The responder sends second response information to the initiator over the first channel.

The second response information is used to confirm a ranging parameter or a sensing parameter. For step 1805, refer to step 902.

1806: The initiator performs ranging or sensing with the initiator over the UWB channel.

1807: The initiator periodically broadcasts eighth information.

Step 1807 is optional.

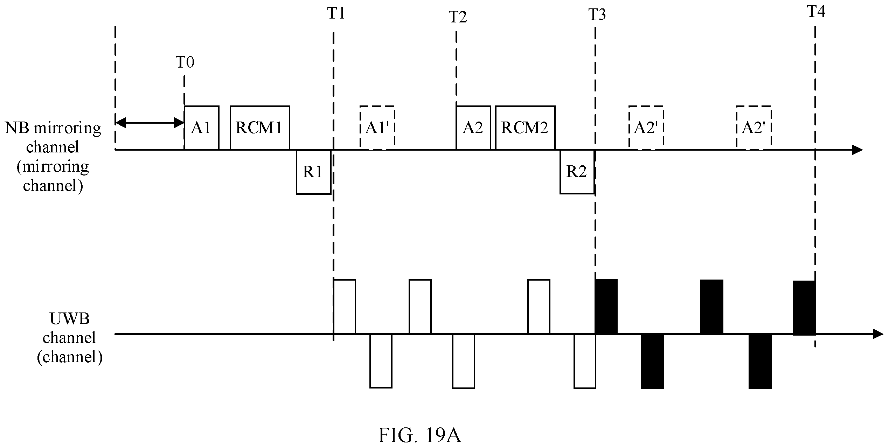

FIG. 19A to FIG. 19C are diagrams of a UWB channel access process according to an embodiment of this application. In FIG. 19A to FIG. 19C, an example in which two UWB apparatuses contend for a UWB channel is used to show an access process of the UWB channel. FIG. 19A to FIG. 19C all show a method procedure executed by a UWB apparatus 1 that obtains a second using period by contention, and a method procedure executed by an initiator that obtains a third using period by contention (corresponding to the method procedure in FIG. 18). In FIG. 19A to FIG. 19C, a white rectangle shows a status in which C1 and the responder of C1 use the UWB channel, and a black rectangle shows a status in which C2 and the responder of C2 use the UWB channel.

In FIG. 19A, RCM1 represents information (similar to the seventh information) sent by the UWB apparatus 1 through unicast, and RCM2 represents the seventh information sent by the initiator through unicast. For meanings of T0, T1, T2, T3, R1, A1', R2, and A2', refer to FIG. 17B. A difference between FIG. 19A and FIG. 17A may be understood as that A1 in FIG. 17A is split into A1 and RCM1 in FIG. 19A, and A2 in FIG. 17A is split into A2 and RCM2 in FIG. 19A. A1 in FIG. 17A includes the end time of the second using period, and ranging arrangement or sensing arrangement. A1 in FIG. 19A includes only the end time of the second using period. RCM1 in FIG. 19A may include ranging arrangement or sensing arrangement, and may further include the end time of the second using period. A2 in FIG. 17A includes the end time of the third using period, and ranging arrangement or sensing arrangement. A2 in FIG. 19A includes only the end time of the third using period. RCM2 in FIG. 19A may include ranging arrangement or sensing arrangement, and may further include the end time of the third using period.

As shown in FIG. 19A, an example of an interaction procedure of the method in FIG. 18 is as follows: C1 and C2 contend for the second using period of the UWB channel. C1 obtains the second using period by contention at T0. After obtaining the second using period by contention, C1 broadcasts A1 over the first channel to reserve the second using period. C1 sends RCM1 to the responder through unicast. C1 receives R1 sent by the responder for RCM1, and performs ranging or sensing with the responder by using the UWB channel in the second using period. C1 periodically sends A1' in the ranging or sensing process by using the UWB channel. C2 obtains the third using period by contention at T2. C2 broadcasts A2 over the first channel in a case in which the time interval between T2 and T3 (or T4) is less than the time threshold, to reserve the third using period. C2 sends RCM2 to the responder through unicast. C2 receives the R2 sent by the responder of C2 for RCM2, and performs ranging or sensing with the responder of C2 by using the UWB channel in the second using period. C2 periodically sends A2' in the ranging or sensing process by using the UWB channel.

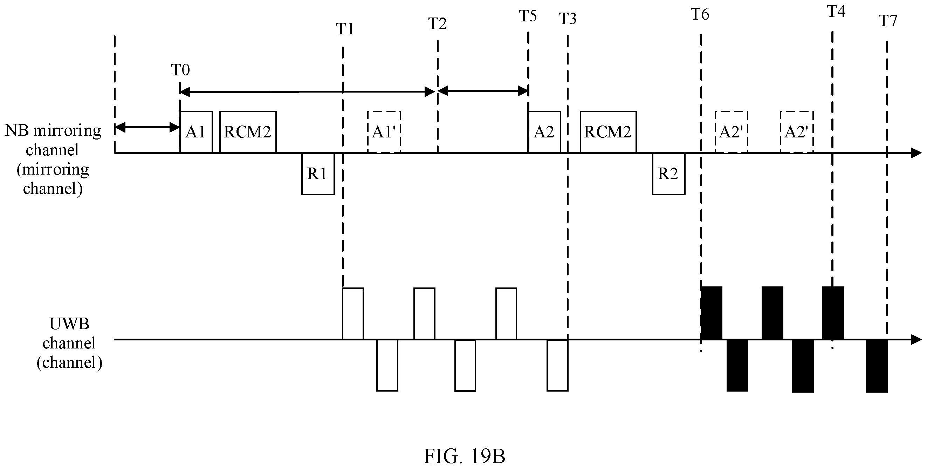

In FIG. 19B, RCM1 represents information (similar to the seventh information) sent by the UWB apparatus 1 through unicast. RCM2 represents the seventh information sent by the initiator through unicast. For meanings of T0, T1, T2, T3, T5, T6, T7, R1, A1', R2, and A2', refer to FIG. 17B. For meanings of A1, RCM1, A2, and RCM2, refer to FIG. 19A.

As shown in FIG. 19B, an example of an interaction procedure of the method in FIG. 18 is as follows: C1 and C2 contend for the second using period of the UWB channel, and C1 obtains the second using period by contention at T0. After obtaining the second using period by contention, C1 broadcasts A1 over the first channel to reserve the second using period. C1 sends RCM1 to the responder through unicast. C1 receives R1 sent by the responder for RCM1, and performs ranging or sensing with the responder by using the UWB channel in the second using period. C1 periodically sends A1' in the ranging or sensing process by using the UWB channel. C2 obtains the third using period by contention at T2 for the first time. C2 contends for the UWB channel again in a case in which the time interval between T2 and T3 (or T4) is greater than or equal to the time threshold. C2 obtains the third using period of the UWB channel by contention for the second time at T5. In a case in which a time interval between T5 and T6 (or T7) is less than the time threshold, C2 broadcasts A2 over the first channel to reserve the third using period. C2 sends RCM2 to the responder through unicast. C2 receives R2 sent by the responder for RCM2, and performs ranging or sensing with the responder of C2 by using the UWB channel in the second using period. C2 periodically sends A2' in the ranging or sensing process by using the UWB channel.

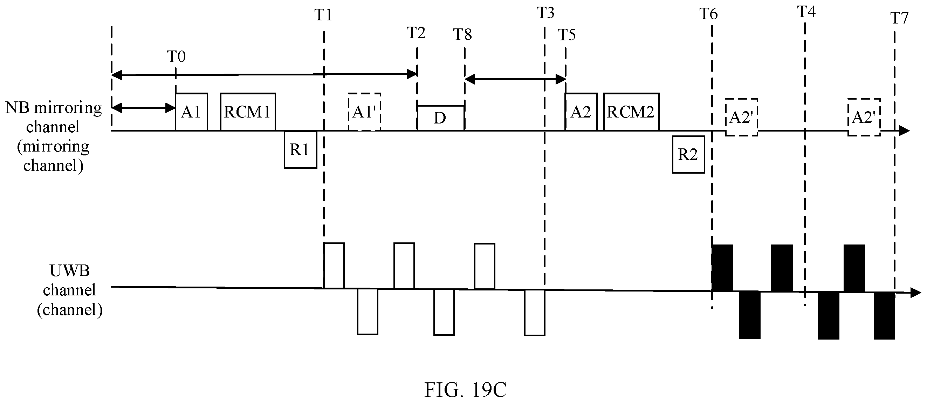

In FIG. 19C, RCM1 represents information (similar to the seventh information) sent by the UWB apparatus 1 through unicast, and RCM2 represents the seventh information sent by the initiator through unicast. For meanings of T0, T1, T2, T3, T5, T6, T7, R1, A1', R2, and A2', refer to FIG. 17B. For meanings of A1, RCM1, A2, and RCM2, refer to FIG. 19A.

As shown in FIG. 19C, an example of an interaction procedure of the method in FIG. 18 is as follows: C1 and C2 contend for the UWB channel. C1 obtains the second using period of the UWB channel by contention at T0. After obtaining the second using period by contention, C1 broadcasts A1 over the first channel to reserve the second using period. C1 sends RCM1 to the responder through unicast. C1 receives R1 sent by the responder for RCM1, and performs ranging or sensing with the responder by using the UWB channel in the second using period. C1 periodically sends A1' in the ranging or sensing process by using the UWB channel. C2 obtains the third using period by contention for the first time at T2. C2 contends for the UWB channel again after sending the data in a case in which the time interval between T2 and T3 (or T4) is greater than or equal to the time threshold. C2 obtains the third using period by contention for the second time at T5. In a case in which a time interval between T5 and T6 (or T7) is less than the time threshold, C2 broadcasts A2 over the first channel to reserve the third using period. C2 sends RCM2 to the responder through unicast. C2 receives R2 sent by the responder for RCM2, and performs ranging or sensing with the responder of C2 by using the UWB channel in the second using period. C2 periodically sends A2' in the ranging or sensing process by using the UWB channel.

In embodiments of this application, the initiator sends the seventh information to the responder through unicast, where the seventh information is used by the responder to perform ranging or sensing with the initiator by using the UWB channel. This can avoid a security or privacy problem that may be caused when ranging arrangement or sensing arrangement is carried in the broadcast information (that is, information that is broadcast).

In an actual application, when using the UWB channel obtained by contention by the UWB apparatus, the UWB apparatus usually does not always occupy the UWB channel. In other words, the UWB apparatus does not always use the UWB channel in the using period of the UWB channel obtained by contention by the UWB apparatus. For this feature that the UWB apparatus uses the UWB channel, this application provides a UWB channel access solution that can improve utilization of the UWB channel. The following describes this solution with reference to the accompanying drawings.

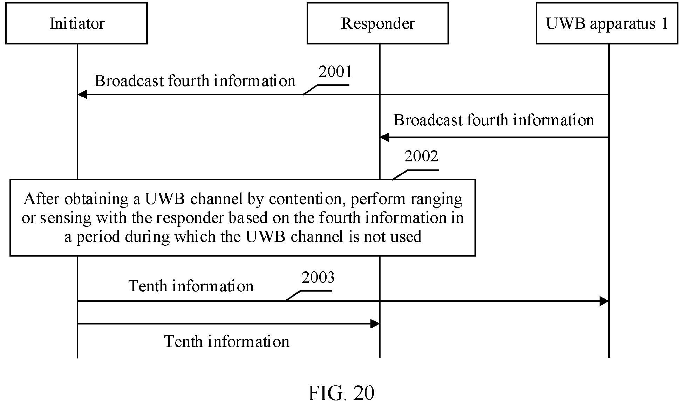

FIG. 20 is an interaction flowchart of further another UWB channel access method according to an embodiment of this application. As shown in FIG. 20, the method includes the following steps.

2001: The initiator receives fourth information broadcast by the UWB apparatus 1.

The fourth information indicates a status in which the UWB channel is used or the UWB channel is not used. The fourth information may include ranging arrangement of a UWB apparatus 1 that is performing ranging by using the UWB channel and has not completed ranging, or sensing arrangement of a UWB apparatus 1 that is performing sensing by using the UWB channel and has not completed sensing. Ranging arrangement may include information such as a quantity of ranging rounds, a quantity of ranging slots included in each ranging round, duration of the ranging slot, a quantity of UWB segments included in each ranging round, and duration of each UWB segment. The fourth information may further include ranging arrangement of another UWB apparatus that performs ranging over the UWB channel and does not complete ranging, or sensing arrangement of another UWB apparatus that is performing sensing over the UWB channel and does not complete sensing.

2002: After obtaining the UWB channel by contention, the initiator performs ranging or sensing with the responder based on the fourth information in a period during which the UWB channel is not used.

The initiator may determine, based on the fourth information, the period during which the UWB channel is not used. For example, the initiator contends for the UWB channel by using a contention backoff mechanism, and after backing off to 0, performs ranging or sensing based on the foregoing fourth information in the period during which the foregoing UWB channel is not used.

2003: The initiator broadcasts tenth message.

Optionally, the initiator broadcasts the tenth information over the first channel corresponding to the UWB channel, where the tenth information indicates a status in which the UWB channel is used or the UWB channel is not used. The UWB apparatus that receives the tenth information may obtain, based on the tenth information, the period during which the UWB channel is not used, and further perform ranging or sensing in the period during which the UWB channel is not used. The tenth information may include ranging arrangement of a UWB apparatus that is performing ranging using the UWB channel and has not completed ranging, or sensing arrangement of a UWB apparatus that is performing sensing by using the UWB channel and has not completed sensing. In comparison with the fourth information, the tenth information includes ranging arrangement or sensing arrangement of the initiator, and the fourth information does not include ranging arrangement or sensing arrangement of the initiator. The tenth information may be understood as including ranging arrangement (or sensing arrangement) of an initiator and another UWB apparatus that has not completed ranging (or sensing) and that operates on a same UWB channel. Step 2003 is optional.

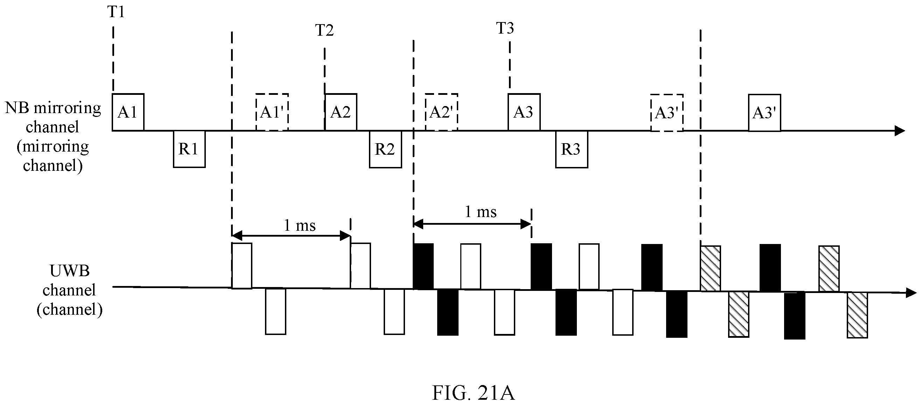

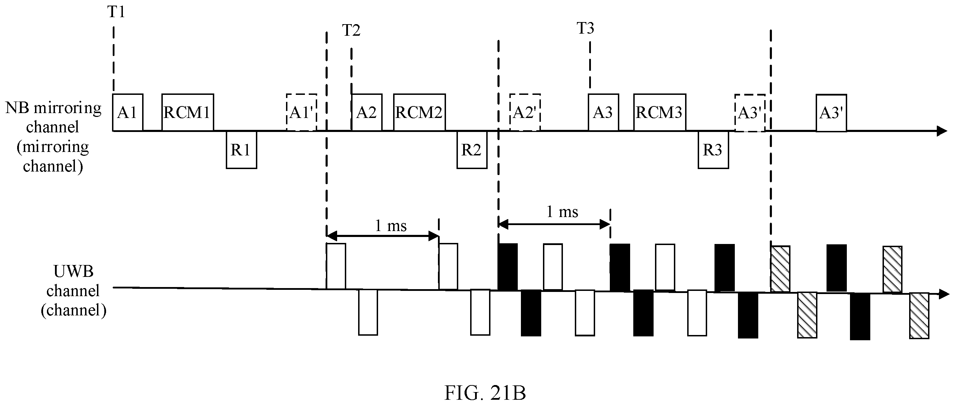

FIG. 21A and FIG. 21B are diagrams of a UWB channel access process according to an embodiment of this application. In FIG. 21A and FIG. 21B, three UWB apparatuses are used as an example to show a UWB channel access process. In FIG. 21A and FIG. 21B, A1 and A1' represent information sent by the UWB apparatus 1 (subsequently replaced by C1) over a narrowband mirroring channel. R1 represents information received by C1 over the narrowband mirroring channel. A2 and A2' represent information sent by the initiator (subsequently replaced by C2) over the narrowband mirroring channel. R2 represents information received by C2 over the narrowband mirroring channel. A3 and A3' represent information sent by the UWB apparatus 2 (subsequently replaced by C2) over the narrowband mirroring channel. R3 represents information received by C3 by using the narrowband mirroring channel. T1 represents time at which C1 backs off to 0. T2 represents time at which C2 backs off to 0. T3 represents time at which C3 backs off to 0.

In FIG. 21A, A1 represents information (similar to the first information) broadcast by C1. R1 represents response information (similar to the second information) sent by a responder of C1 for A1. A1' represents information (similar to the third information) periodically broadcast by C1. A2 represents information (similar to the first information) broadcast by C2. R2 represents response information (similar to the second information) sent by a responder of C2 for A2. A2' represents information (similar to the third information) periodically broadcast by C2. A3 represents information (similar to the first information) broadcast by C3. R3 represents response information (similar to the second information) sent by a responder of C3 for A3. A3' represents information (similar to the third information) periodically broadcast by C3. In FIG. 21B, A1 represents information broadcast by C1. RCM1 represents information sent by C1 through unicast. R1 represents response information sent by the responder of C1 for RCM1. A2 represents information broadcast by C2. RCM2 indicates information sent by C2 through unicast. R2 indicates response information sent by the responder of C1 for RCM2. A3 indicates the information broadcast by C3. RCM3 indicates information sent by C3 through unicast. R1 represents response information sent by the responder of C1 for RCM1. Meanings of A1', A2', and A3' in FIG. 21B are the same as those in FIG. 21A. A difference between FIG. 21B and FIG. 21A may be understood as that A1 in FIG. 21A is split into A1 and RCM1 in FIG. 21B, A2 in FIG. 21A is split into A2 and RCM2 in FIG. 21B, and A3 in FIG. 21A is split into A3 and RCM3 in FIG. 21B. None of A1, A2, and A3 includes ranging arrangement (or sensing arrangement). RCM1, RCM2, RCM3 include ranging arrangement (or sensing arrangement). In FIG. 21A and FIG. 21B, a white rectangle shows a case in which C1 and the responder of C1 use the UWB channel, a black rectangle shows a case in which C2 and the responder of C2 use the UWB channel, and a diagonal rectangle shows a case in which C2 and the responder of C2 use the UWB channel. In FIG. 21A and FIG. 21B, multi-millisecond UWB segment ranging is used as an example. However, the method is also applicable to a scenario in which an interval between two consecutive UWB ranging signals is not 1 ms. This is not limited herein.

As shown in FIG. 21A, an example of an interaction procedure of the method in FIG. 20 is as follows: C1, C2, and C3 contend for a UWB channel by using a contention backoff mechanism. C1 first backs off to 0, and C1 broadcasts A1 to reserve a UWB channel. C1 receives R1 sent by the responder of C1 for A1. C1 uses the UWB channel for ranging or sensing. C1 periodically sends A1'. C2 backs off to 0 in a process in which C1 uses the UWB channel (T2). C2 obtains, based on the received A1 or A1' of C1, start time and end time at which C1 uses the UWB channel, and ranging arrangement or sensing arrangement. C2 broadcasts A2 to reserve the UWB channel. C2 receives R2 sent by the responder of C2 for A2. C2 performs ranging (or sensing) over the UWB channel in a period during which C1 does not perform UWB ranging (or sensing). C2 periodically sends A2'. C3 obtains, based on the received A1 or A1' of C1, start time and end time at which C1 uses the UWB channel, and ranging arrangement or sensing arrangement of C1. C3 obtains, based on A2 or A2' received from C2, the start time and the end time at which C2 uses the UWB channel, and ranging arrangement or sensing arrangement of C2. C3 broadcasts A3 to reserve the UWB channel. C3 receives R3 sent by the responder of C3 for A3. C3 performs ranging (or sensing) over the UWB channel in a period during which C1 and C2 do not perform UWB ranging (or sensing). C3 periodically sends A3'. In FIG. 21A, C2 and C3 receive A1 or A1' of C1 in a backoff process, to learn the start time and the end time at which C1 uses the UWB channel, and ranging arrangement (or sensing arrangement). When C2 backs off to 0, ranging (or sensing) may be performed by using time at which C1 does not perform UWB ranging (or sensing). When C3 backs off to 0, ranging arrangement (or sensing arrangement) needs to be performed based on C1 and C2, to reserve a proper ranging period (or ranging period) for C3.

As shown in FIG. 21B, an example of an interaction procedure of the method in FIG. 20 is as follows: C1, C2, and C3 contend for a UWB channel by using a contention backoff mechanism. C1 first backs off to 0, and C1 broadcasts A1 to reserve a UWB channel. C1 sends RCM1 to a responder of C1 through unicast. C1 receives R1 sent by the responder of C1 for RCM1. C1 uses the UWB channel for ranging or sensing. C1 periodically sends A1'. C2 backs off to 0 in a process in which C1 uses the UWB channel. C2 obtains, based on the received A1 or A1' of C1, start time and end time at which C1 uses the UWB channel, and ranging arrangement or sensing arrangement. C2 broadcasts A2 to reserve the UWB channel. C2 sends RCM2 to a responder of C2 through unicast. C2 receives R2 sent by the responder of C2 for RCM2. C2 performs ranging (or sensing) over the UWB channel in a period during which C1 does not perform UWB ranging (or sensing). C2 periodically sends A2'. C3 obtains, based on the received A1 or A1' of C1, start time and end time at which C1 uses the UWB channel, and ranging arrangement or sensing arrangement of C1. C3 obtains, based on A2 or A2' received from C2, the start time and the end time at which C2 uses the UWB channel, and ranging arrangement or sensing arrangement of C2. C3 broadcasts A3 to reserve the UWB channel. C3 sends RCM3 to a responder of C3 through unicast. C3 receives R3 sent by the responder of C3 for RCM3. C3 performs ranging (or sensing) over the UWB channel in a period during which C1 and C2 do not perform UWB ranging (or sensing). C3 periodically sends A3'.

In embodiments of this application, after obtaining the UWB channel by contention, the initiator performs ranging or sensing based on the fourth information in a period during which the UWB channel is not used, thereby improving utilization of a channel.

With reference to the accompanying drawings, the following describes a structure of a communication apparatus (or a UWB apparatus) that can implement the UWB channel access method provided in embodiments of this application.

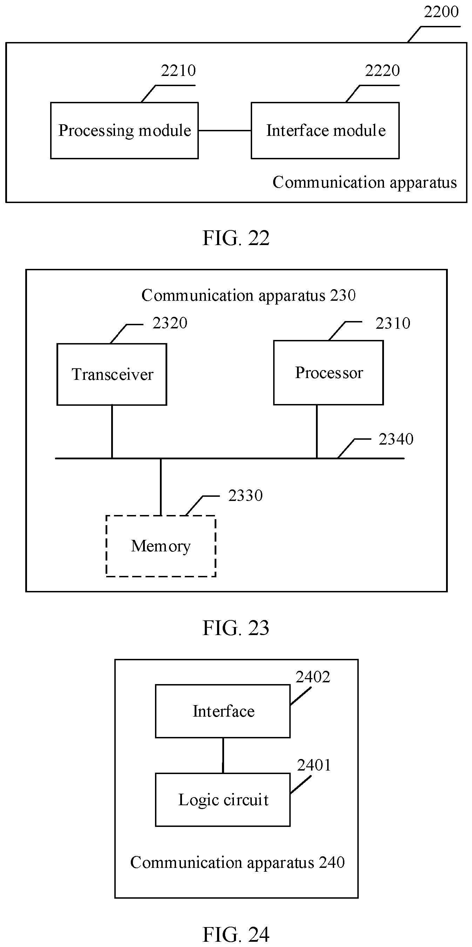

FIG. 22 is a diagram of a structure of a communication apparatus 2200 according to an embodiment of this application. The communication apparatus 2200 may correspondingly implement functions or steps implemented by the initiator in the foregoing method embodiments, or may correspondingly implement functions or steps implemented by the responder in the foregoing method embodiments, or may correspondingly implement functions or steps implemented by the UWB apparatus 1 in the foregoing method embodiments. The communication apparatus may include a processing module 2210 and an interface module 2220. Optionally, a storage unit may be further included. The storage unit may be configured to store instructions (code or a program) and/or data. The processing module 2210 and the interface module 2220 may be coupled to the storage unit. For example, the processing module 2210 may read the instructions (the code or the program) and/or the data in the storage unit, to implement a corresponding method. The foregoing units may be independently disposed, or may be partially or completely integrated. For example, the interface module 2220 may include a sending module and a receiving module. The sending module may be a transmitter, and the receiving module may be a receiver. An entity corresponding to the interface module 2220 may be a transceiver, or may be a communication interface.

In some possible implementations, the communication apparatus 2200 can correspondingly implement behavior and functions of the initiator in the foregoing method embodiments. For example, the communication apparatus 2200 may be an initiator, or may be a component (for example, a chip or a circuit) used in an initiator. For example, the interface module 2220 may be configured to perform all receiving or sending operations performed by the initiator in the embodiments in FIG. 6, FIG. 9, FIG. 13, FIG. 15, FIG. 16, FIG. 18, and FIG. 20, for example, step 601 in the embodiment shown in FIG. 6, step 901, step 902, step 905, and step 907 in the embodiment shown in FIG. 9, step 1301, step 1303, step 1304, step 1306, and step 1308 in the embodiment shown in FIG. 13, step 1501 in the embodiment shown in FIG. 15, step 1603, step 1604, and step 1606 in the embodiment shown in FIG. 16, step 1803, step 1804, step 1805, and step 1807 in the embodiment shown in FIG. 18, step 2001 and step 2003 in the embodiment shown in FIG. 20, and/or another process used to support the technology described in this specification. The processing module 2210 is configured to perform all operations performed by the initiator except sending and receiving operations in the embodiments in FIG. 6, FIG. 9, FIG. 13, FIG. 15, FIG. 16, FIG. 18, and FIG. 20, for example, step 602 in the embodiment shown in FIG. 6, step 904 in the embodiment shown in FIG. 9, step 1305 in the embodiment shown in FIG. 13, step 1502 in the embodiment shown in FIG.

15, step 1601, step 1602, step 1603, and step 1605 in the embodiment shown in FIG. 16, step 1801, step 1802, step 1803, and step 1806 in the embodiment shown in FIG. 18, and step 2002 in the embodiment shown in FIG. 20.

In some possible implementations, the communication apparatus 2200 can correspondingly implement behavior and functions of the responder in the foregoing method embodiments. For example, the communication apparatus 2200 may be a responder, or may be a component (for example, a chip or a circuit) used in a responder. For example, the interface module 2220 may be configured to perform all receiving or sending operations performed by the responder in the embodiments in FIG. 6, FIG. 9, FIG. 13, FIG. 15, FIG. 16, FIG. 18, and FIG. 20, for example, step 601 in the embodiment shown in FIG. 6, step 901, step 902, step 905, and step 907 in the embodiment shown in FIG. 9, step 1301, step 1303, step 1304, step 1306, and step 1308 in the embodiment shown in FIG. 13, step 1501 in the embodiment shown in FIG. 15, step 1603, step 1604, and step 1606 in the embodiment shown in FIG. 16, step 1803, step 1804, step 1805, and step 1807 in the embodiment shown in FIG. 18, step 2001 and step 2003 in the embodiment shown in FIG. 20, and/or another process used to support the technology described in this specification. The processing module 2210 is configured to perform all operations performed by the responder except sending and receiving operations in the embodiments in FIG. 6, FIG. 9, FIG. 13, FIG. 15,

FIG. 16, FIG. 18, and FIG. 20, for example, step 602 in the embodiment shown in FIG. 6, step 904 in the embodiment shown in FIG. 9, step 1305 in the embodiment shown in FIG. 13, step 1502 in the embodiment shown in FIG. 15, step 1605 in the embodiment shown in FIG. 16, step 1806 in the embodiment shown in FIG. 18, and step 2002 in the embodiment shown in FIG. 20.

In some possible implementations, the communication apparatus 2200 can correspondingly implement behavior and functions of the UWB apparatus 1 in the foregoing method embodiments. For example, the communication apparatus 2200 may be a UWB apparatus 1, or may be a component (for example, a chip or a circuit) used in a UWB apparatus 1. For example, the interface module 2220 may be configured to perform all receiving or sending operations performed by the UWB apparatus 1 in the embodiments in FIG. 6, FIG. 9, FIG. 13, FIG. 15, FIG. 16, FIG. 18, and FIG. 20, for example, step 601 in the embodiment shown in FIG. 6, step 901, step 905, and step 907 in the embodiment shown in FIG. 9, step 1301, step 1306, and step 1308 in the embodiment shown in FIG. 13, step 1501 in the embodiment shown in FIG. 15, step 1603 and step 1606 in the embodiment shown in FIG. 16, step 1803 and step 1807 in the embodiment shown in FIG. 18, step 2001 and step 2003 in the embodiment shown in FIG. 20, and/or another process used to support the technology described in this specification. The processing module 2210 is configured to perform all operations except sending and receiving operations performed by the UWB apparatus 1 in the embodiments in FIG. 6, FIG. 9, and FIG. 13, for example, step 603 and step 604 in the embodiment shown in FIG. 6, step 903 and step 906 in the embodiment shown in FIG. 9, and step 1302 and step 1307 in the embodiment shown in FIG. 13.

FIG. 23 is a diagram of a structure of another communication apparatus 230 according to an embodiment of this application. The communication apparatus in FIG. 23 may be the foregoing initiator, or may be the foregoing responder, or may be the foregoing UWB apparatus 1.

As shown in FIG. 23, the communication apparatus 230 includes at least one processor 2310 and a transceiver 2320.

In some embodiments of this application, the processor 2310 and the transceiver 2320 may be configured to perform a function, an operation, or the like performed by the initiator. For example, the transceiver 2320 performs all receiving or sending operations performed by the initiator in the embodiments in FIG. 6, FIG. 9, FIG. 13, FIG. 15, FIG. 16, FIG. 18, and FIG. 20. For example, the processor 2310 is configured to perform all operations performed by the initiator except sending and receiving operations in the embodiments in FIG. 6, FIG. 9, FIG. 13, FIG. 15, FIG. 16, FIG. 18, and FIG. 20.

In some embodiments of this application, the processor 2310 and the transceiver 2320 may be configured to perform a function, an operation, or the like performed by the responder. For example, the transceiver 2320 performs all receiving or sending operations performed by the responder in the embodiments in FIG. 6, FIG. 9, FIG. 13, FIG. 15, FIG. 16, FIG. 18, and FIG. 20. For example, the processor 2310 is configured to perform all operations performed by the responder except sending and receiving operations in the embodiments in FIG. 6, FIG. 9, FIG. 13, FIG. 15, FIG. 16, FIG. 18, and FIG. 20.

In some embodiments of this application, the processor 2310 and the transceiver 2320 may be configured to perform a function, an operation, or the like performed by the UWB apparatus 1. For example, the transceiver 2320 performs all receiving or sending operations performed by the UWB apparatus 1 in the embodiments in FIG. 6, FIG. 9, FIG. 13, FIG. 15, FIG. 16, FIG. 18, and FIG. 20. The processor 2310 is, for example, is configured to perform all operations except sending and receiving operations performed by the UWB apparatus 1 in the embodiments in FIG. 6, FIG. 9, and FIG. 13.

The transceiver 2320 is configured to communicate with another device/apparatus by using a transmission medium. The processor 2310 receives and sends data and/or signaling by using the transceiver 2320, and is configured to implement the method in the foregoing method embodiments. The processor 2310 may implement a function of the processing module 2210, and the transceiver 2320 may implement a function of the interface module 2220.

Optionally, the communication apparatus 230 may further include at least one memory 2330, configured to store program instructions and/or data. The memory 2330 is coupled to the processor 2310. The coupling in embodiments of this application may be an indirect coupling or a communication connection between apparatuses, units, or modules in an electrical form, a mechanical form, or another form, and is used for information exchange between the apparatuses, the units, or the modules. The processor 2310 may collaborate with the memory 2330. The processor 2310 may execute the program instructions stored in the memory 2330. At least one of the at least one memory may be included in a processor.

A specific connection medium between the transceiver 2320, the processor 2310, and the memory 2330 is not limited in embodiments of this application. In embodiments of this application, the memory 2330, the processor 2310, and the transceiver 2320 are connected through a bus 2340 in FIG. 23. The bus is represented by a bold line in FIG. 23. A manner of connection between other components is merely an example for description, and is not limited thereto. The bus may be classified into an address bus, a data bus, a control bus, and the like. For ease of representation, the bus is represented by using only one bold line in FIG. 23. However, it does not indicate that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

FIG. 24 is a diagram of a structure of still another communication apparatus 240 according to an embodiment of this application. As shown in FIG. 24, the communication apparatus shown in FIG. 24 includes a logic circuit 2401 and an interface 2402. The processing module 2210 in FIG. 22 may be implemented by using a logic circuit 2401, and the interface module 2220 in FIG. 22 may be implemented by using an interface 2402. The logic circuit 2401 may be a chip, a processing circuit, an integrated circuit, a system on chip (system on chip, SoC) chip, or the like. The interface 2402 may be a communication interface, an input/output interface, or the like. In embodiments of this application, the logic circuit and the interface may be coupled to each other. A specific manner of connection between the logical circuit and the interface is not limited in embodiments of this application.

In some embodiments of this application, the logic circuit and the interface may be configured to perform a function, an operation, or the like performed by the initiator. In some embodiments of this application, the logic circuit and the interface may be configured to perform a function, an operation, or the like performed by the responder. In some embodiments of this application, the logic circuit and the interface may be configured to perform a function, an operation, or the like performed by the UWB apparatus 1.

This application further provides a computer-readable storage medium. The computer-readable storage medium stores a computer program or instructions. When the computer program or the instructions is/are run on a computer, the computer is enabled to perform the method in the foregoing embodiments.

This application further provides a computer program product. The computer program product includes instructions or a computer program. When the instructions or the computer program is/are run on a computer, the methods in the foregoing embodiments are performed.

This application further provides a communication system, including the foregoing initiator and the foregoing responder. The communication system may further include the UWB apparatus 1.

It should be noted that, in an access scenario of the UWB channel, for example, a ranging scenario or a sensing scenario, three parties are generally involved, that is, an initiator, a responder, and another communication apparatus (which may be referred to as a third party) that needs to access the UWB channel. The initiator refers to a UWB apparatus that initiates a ranging process (or a ranging task) or a sensing process (or a sensing process). The responder is a UWB apparatus that operates with the initiator to implement ranging or sensing. In this application, the UWB apparatus 1 may be understood as an example of a third party other than the initiator and the responder in the three parties. It should be understood that, for the UWB apparatus, in some scenarios, the UWB apparatus may serve as the initiator, that is, perform an operation performed by the initiator; in some scenarios, the UWB apparatus may serve as the responder, that is, perform an operation performed by the responder; and in some scenarios, the UWB apparatus 1 may serve as the third party, that is, perform the operations performed by the UWB apparatus 1.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the scope of the protection of this application shall be subject to the scope of the protection of the claims.

**Claims**

1. An ultra-wideband UWB channel access method, comprising:

    broadcasting, by an initiator, first information, wherein the first information indicates that the initiator obtains a first using period of a UWB channel by contention, and indicates first time, the first time is time of starting to contend for a second using period of the UWB channel, and the second using period is after the first using period; and performing, by the initiator, ranging or sensing by using the UWB channel, wherein a channel used by the initiator to broadcast the first information is different from the UWB channel.

2. The method according to claim 1, wherein the first time is after start time of the first using period and before end time of the first using period.

3. The method according to claim 1 or 2, wherein the first information comprises the end time of the first using period or the first time, the first time is before the end time of the first using period, and a time interval between the first time and the end time of the first using period is first duration.

4. The method according to any one of claims 1 to 3, wherein the method further comprises:
   sending, by the initiator, second information to a responder through unicast, wherein the second information is used by the responder to perform ranging or sensing with the initiator by using the UWB channel.

5. The method according to any one of claims 1 to 4, wherein the method further comprises:
   periodically broadcasting, by the initiator, third information, wherein the third information is used to obtain the end time of the first using period or the first time.

6. The method according to any one of claims 1 to 5, wherein the method further comprises:

    receiving, by the initiator, fourth information, wherein the fourth information indicates a status in which the UWB channel is used; and
    after obtaining the UWB channel by contention, performing, by the initiator, ranging or sensing based on the fourth information in a period during which the UWB channel is not used.

7. The method according to any one of claims 1 to 6, wherein the broadcasting, by an initiator, first information comprises:
   broadcasting, by the initiator, the first information over a first channel, wherein a frequency range of the first channel is 5730 MHz to 5735 MHz.

8. A UWB channel access method, comprising:

    broadcasting, by an initiator, fifth information, wherein the fifth information indicates that the initiator obtains a third using period of a UWB channel by contention, a time interval between third time and second time is less than a time threshold, the second time is time at which the initiator broadcasts the fifth information, and the third time is start time of the third using period, or the third time is end time of the third using period; and
    performing, by the initiator, ranging or sensing by using the UWB channel, wherein a channel used by the initiator to broadcast the fifth information is different from the UWB channel.

9. The method according to claim 8, wherein the fifth information comprises the end time of the third using period.

10. The method according to claim 8 or 9, wherein before the broadcasting, by an initiator, fifth information, the method further comprises:

    contending, by the initiator, for the UWB channel; and
    when a time interval between fourth time at which the initiator obtains the UWB channel by contention and fifth time is greater than or equal to the time threshold, contending, by the initiator, for the UWB channel again or contending for the UWB channel again after sending data, wherein the fifth time is start time or end time of a fourth using period, and the fourth using period is a period estimated by the initiator for using the UWB channel when the initiator obtains the UWB channel by contention at the fourth time.

11. The method according to any one of claims 8 to 10, wherein the method further comprises:

receiving, by the initiator, sixth information, wherein the sixth information indicates a status in which the UWB channel is used; and
after obtaining the UWB channel by contention, performing, by the initiator, ranging or sensing based on the sixth information in a period during which the UWB channel is not used.

12. The method according to any one of claims 8 to 11, wherein the broadcasting, by an initiator, fifth information comprises:
broadcasting, by the initiator, the fifth information over a first channel, wherein a frequency range of the first channel is 5730 MHz to 5735 MHz.

13. A UWB channel access method, comprising:

receiving first information broadcast by an initiator, wherein the first information indicates that the initiator obtains a first using period of a UWB channel by contention, and indicates first time, the first time is time of starting to contend for a second using period of the UWB channel, the second using period is after the first using period, and a channel used by the initiator to broadcast the first information is different from the UWB channel; and
starting to contend for the second using period of the UWB channel at the first time.

14. The method according to claim 13, wherein the first time is after start time of the first using period and before end time of the first using period.

15. The method according to claim 13 or 14, wherein the first information comprises the end time of the first using period or the first time, the first time is before the end time of the first using period, and a time interval between the first time and the end time of the first using period is first duration.

16. The method according to any one of claims 13 to 15, wherein the method further comprises:
receiving third information periodically broadcast by the initiator, wherein the third information is used to obtain the end time of the first using period or the first time.

17. The method according to any one of claims 13 to 16, wherein the first information further indicates a status in which the UWB channel is used by the initiator.

18. The method according to claim 17, wherein the method further comprises:
after the UWB channel is obtained by contention, performing ranging or sensing based on the first information in a period during which the UWB channel is not used.

19. The method according to claim 18, wherein the method further comprises:
broadcasting fourth information, wherein the fourth information indicates a status in which the UWB channel is used.

20. The method according to any one of claims 13 to 19, wherein the receiving first information broadcast by an initiator comprises:
receiving the first information broadcast by the initiator over a first channel, wherein a frequency range of the first channel is 5730 MHz to 5735 MHz.

21. A communication apparatus, comprising a module or a unit configured to implement the method according to any one of claims 1 to 7.

22. A communication apparatus, comprising a module or a unit configured to implement the method according to any one of claims 8 to 12.

23. A communication apparatus, comprising a module or a unit configured to implement the method according to any one of claims 13 to 20.

24. A computer-readable storage medium, wherein the computer-readable storage medium stores a computer program, the computer program comprises program instructions, and when the program instructions are executed, a computer is enabled to perform the method according to any one of claims 1 to 7, or when the program instructions are executed, a computer is enabled to perform the method according to any one of claims 8 to 12, or when the program instructions are executed, a computer is enabled to perform the method according to any one of claims 13 to 20.

25. A communication apparatus, comprising a processor, wherein the processor is coupled to a memory, the memory stores instructions, and the processor is configured to execute the instructions, so that the communication apparatus performs the method according to any one of claims 1 to 7, or the communication apparatus to perform the method according to any one of claims 8 to 12, or the communication apparatus to perform the method according to any one of claims 13 to 20.

26. A computer program product, wherein the computer program product comprises a computer program, the computer program comprises program instructions, and when the program instructions are executed, a computer is enabled to perform the method according to any one of claims 1 to 20.

UWB
segment 1

UWB
segment 2

UWB
segment 3

1 ms

1 ms

1 ms

...

Time

FIG. 1

Initiator

Responder

T1

Ranging signal

T2

Ranging signal

T3

T4

Carry T2/T3

FIG. 2

FIG. 3

FIG. 4

Third UWB
apparatus

Second UWB
apparatus

Ranging signal 1          Ranging signal 2

First UWB
apparatus

Fourth UWB
apparatus

FIG. 5

Initiator

Responder

UWB apparatus 1

First information          601

602

The initiator performs ranging or sensing with the
responder over a UWB channel

603

Stop contending for the UWB
channel

604

Start to contend for the UWB
channel at first time

FIG. 6

701                              702

First using period          Second using period

FIG. 7A

703

704

| First using period | | Second using period |
|---|---|---|

705

FIG. 7B

801                           802                                    803

| First using period | Second using period | Third using period |
|---|---|---|

FIG. 8A

804                           805                                    806

| First using period | Second using period | Third using period |
|---|---|---|

FIG. 8B

| Initiator | Responder | UWB apparatus 1 |

Broadcast first information over a first channel

First information 901 →

902
Send first response information over the first channel

First response information ←

903
┌ Stop contending for a UWB channel ┐

904
The initiator performs ranging or sensing with the responder over the UWB channel

┌ Periodically broadcast third information ┐

Third information 905 →

906
Start to contend for the UWB channel at first time

Information 1 907 ←

Broadcast information 1 over the first channel

FIG. 9

Ranging block
(ranging block)

| Ranging round 0 (Ranging round 0) | Ranging round 1 (ranging round 1) | Ranging round 2 (ranging round 2) | Ranging round 3 (ranging round 3) | ... | Ranging round (N−1) |
|---|---|---|---|---|---|

Ranging round
(N−1)

| Ranging slot 0 (ranging slot 0) | Ranging slot 1 (ranging slot 1) | Ranging slot 2 (ranging slot 2) | ... | Ranging slot (M−1) |
|---|---|---|---|---|

Ranging slot
(M−1)

FIG. 10

FIG. 11

UWB period 1
(UWB period 1)

UWB period 2
(UWB period 2)

NB contention 1
(contention 1)

1101 NB contention 2
(contention 2)

NB contention 3
(contention 3)

NB mirroring channel
(mirroring channel)

T1

A1

A1'

A2

A2'

A2'

R1

(T2–T1)

R2

UWB channel
(channel)

FIG. 12

| Initiator | Responder | UWB apparatus 1 |
|---|---|---|

Broadcast first information over a first channel

First information 1301 →

┌─ 1302 ─┐
Stop contending for a
UWB channel
└────────┘

Send second information through unicast

Second information 1303 →

First response information ←

┌ 1304
Send first response information over the first channel

┌ 1305
The initiator performs ranging or sensing with the responder over the UWB channel

┌────────────┐
Periodically broadcast third information
└────────────┘

Third information 1306 →

┌ 1307
Start to contend for the UWB channel at first time

Information 1 1308 ←

Broadcast information 1 over the first channel

FIG. 13

FIG. 14

FIG. 15

FIG. 16

FIG. 17A

EP 4 498 707 A1

FIG. 17B

FIG. 17C

Initiator

Responder

UWB
apparatus 1

1801

The initiator contends for a
UWB channel

1802

When a time interval between fourth time at
which the UWB channel is obtained by
contention and fifth time is greater than or equal
to a time threshold, contend for the UWB
channel again or contend for the UWB channel
again after sending data

1803

When a time interval between second
time at which the UWB channel is
obtained by contention and third time is
less than the time threshold, broadcast
fifth information over a first channel

Fifth
information

Seventh
information 1804

Send seventh information
through unicast

Second
response
information

1805

Send second response information
over the first channel

1806

The initiator performs ranging or sensing with the
responder over the UWB channel

Eighth
information 1807

Periodically broadcast
eighth information

FIG. 18

FIG. 19A

EP 4 498 707 A1

FIG. 19B

EP 4 498 707 A1

FIG. 19C

FIG. 20

FIG. 21A

EP 4 498 707 A1

NB mirroring channel (mirroring channel)

T1

A1 | RCM1 | R1 | A1' | A2 | RCM2 | R2 | A2' | A3 | RCM3 | R3 | A3' | A3'

T2

T3

UWB channel (channel)

1 ms

1 ms

FIG. 21B

2200

Processing module 2210 — Interface module 2220

Communication apparatus

FIG. 22

Communication apparatus 230

Transceiver 2320

Processor 2310

2340

Memory 2330

FIG. 23

Interface 2402

Logic circuit 2401

Communication apparatus 240

FIG. 24

<table>
<tr><td colspan="2" style="text-align:center"><strong>INTERNATIONAL SEARCH REPORT</strong></td><td colspan="2">International application No.<br><strong>PCT/CN2023/088548</strong></td></tr>
</table>

**A. CLASSIFICATION OF SUBJECT MATTER**

H04W4/02(2018.01)i

According to International Patent Classification (IPC) or to both national classification and IPC

**B. FIELDS SEARCHED**

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT; WPABSC; ENTXTC; WPABS; ENTXT; VEN; DWPI; CJFD; 3GPP: 超宽带, 信道, 接入, 窄带, 测距, 感知, 广播, 指示, 竞争, 时段, 时间, 开始, UWB, ultra wideband, channel, access, narrow band, range finding, perception, broadcast, indicate, competition, period, time, start

**C. DOCUMENTS CONSIDERED TO BE RELEVANT**

| Category* | Citation of document, with indication, where appropriate, of the relevant passages | Relevant to claim No. |
|---|---|---|
| X | CN 108964867 A (SICHUAN KUNCHEN TECHNOLOGY CO., LTD.) 07 December 2018 (2018-12-07)<br>   claims 1-19, and description, paragraphs [0002]-[0007] | 1-26 |
| A | CN 107710860 A (HUAWEI TECHNOLOGIES CO., LTD.) 16 February 2018 (2018-02-16)<br>   entire document | 1-26 |
| A | CN 102100093 A (QUALCOMM INC. et al.) 15 June 2011 (2011-06-15)<br>   entire document | 1-26 |
| A | CN 112261585 A (NANJING WO XU WIRELESS CO., LTD.) 22 January 2021 (2021-01-22)<br>   entire document | 1-26 |
| A | US 2022066010 A1 (CISCO TECHNOLOGY, INC.) 03 March 2022 (2022-03-03)<br>   entire document | 1-26 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2023** | **15 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/088548**

| Patent document cited in search report | | | Publication date (day/month/year) | Patent family member(s) | | | Publication date (day/month/year) |
|---|---|---|---|---|---|---|---|
| CN | 108964867 | A | 07 December 2018 | None | | | |
| CN | 107710860 | A | 16 February 2018 | WO | 2017004796 | A1 | 12 January 2017 |
| CN | 102100093 | A | 15 June 2011 | TW | 201108839 | A | 01 March 2011 |
| | | | | US | 2010035629 | A1 | 11 February 2010 |
| | | | | US | 8798029 | B2 | 05 August 2014 |
| | | | | KR | 20110051229 | A | 17 May 2011 |
| | | | | KR | 101355968 | B1 | 29 January 2014 |
| | | | | JP | 2011530871 | A | 22 December 2011 |
| | | | | JP | 5384637 | B2 | 08 January 2014 |
| | | | | EP | 2332354 | A1 | 15 June 2011 |
| | | | | EP | 2332354 | B1 | 06 February 2019 |
| | | | | WO | 2010017140 | A1 | 11 February 2010 |
| CN | 112261585 | A | 22 January 2021 | None | | | |
| US | 2022066010 | A1 | 03 March 2022 | WO | 2022046479 | A1 | 03 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210467604